(19) Europäisches Patentamt / European Patent Office / Office européen des brevets

(11) **EP 3 461 783 B1**

(12) **EUROPÄISCHE PATENTSCHRIFT**

(45) Veröffentlichungstag und Bekanntmachung des Hinweises auf die Patenterteilung:
**13.11.2019 Patentblatt 2019/46**

(51) Int Cl.:
***B66C 13/48*** *(2006.01)*          ***B66C 19/00*** *(2006.01)*

(21) Anmeldenummer: **17194041.4**

(22) Anmeldetag: **29.09.2017**

(54) **HEBEEINRICHTUNG UND VERFAHREN ZUM STEUERN EINER HEBEEINRICHTUNG**

LIFTING DEVICE AND METHOD FOR CONTROLLING A LIFTING DEVICE

ÉQUIPEMENT DE LEVAGE ET PROCÉDÉ DE COMMANDE D'UN ÉQUIPEMENT DE LEVAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.04.2019 Patentblatt 2019/14**

(73) Patentinhaber: **B&R Industrial Automation GmbH 5142 Eggelsberg (AT)**

(72) Erfinder: **Skotschek, Ralf 4400 Steyr (AT)**

(74) Vertreter: **Patentanwälte Pinter & Weiss OG Prinz-Eugen-Straße 70 1040 Wien (AT)**

(56) Entgegenhaltungen:
**EP-A1- 2 402 280     US-A- 6 065 619**

- **HUANG Y ET AL: "The optimum route problem by genetic algorithm for loading/unloading of yard crane", COMPUTERS & INDUSTRIAL ENGINEERING, PERGAMON, Bd. 56, Nr. 3 4. April 2009 (2009-04-04), Seiten 993-1001, XP025962128, ISSN: 0360-8352 Gefunden im Internet: URL:https://www.sciencedirect.com/science/article/pii/S036083520800199X?via%3Dihub [gefunden am 2018-03-20]**

EP 3 461 783 B1

**Beschreibung**

Die Erfindung betrifft ein Verfahren zum Steuern einer Hebeeinrichtung zum Bewegen einer Last entlang einer Trajektorie von einem Anfangspunkt zu einem Endpunkt, wobei die Last entlang einer ersten Bewegungsachse und entlang einer zweiten Bewegungsachse bewegt wird, wobei der Anfangspunkt und der Endpunkt der Trajektorie sowie Verbotszonen festgelegt werden, die während der Bewegung der Last von der Last vermieden werden, und dass daraus von einer Recheneinheit eine geometrische oder verrundete geometrische oder glatte geometrische Bahn berechnet wird. Die Erfindung betrifft weiters eine Hebeeinrichtung zum Bewegen einer Last entlang einer Trajektorie.

Hebeeinrichtungen, insbesondere Kräne gibt es in vielen verschiedenen Ausführungsformen und sie kommen in vielen unterschiedlichen Anwendungsgebieten zum Einsatz. Zum Beispiel gibt es Turmkräne, die vorwiegend für den Hoch- und Tiefbau verwendet werden, oder es gibt Mobilkräne, z.B. für die Montage von Windkraftanlagen. Brückenkräne werden z.B. als Hallenkräne in Fabrikshallen verwendet und Portalkräne z.B. für die Manipulation von Transportcontainern an Umschlagsorten für den intermodalen Güterumschlag, wie z.B. in Häfen zum Umschlag von Schiffen auf die Eisenbahn oder den LKW oder auf Güterbahnhöfen zum Umschlag von der Eisenbahn auf den LKW oder umgekehrt. Vorwiegend werden dabei die Güter für den Transport in standardisierten Containern gelagert, sogenannten ISO-Containern, welche gleichermaßen für den Transport in den drei Transport-Modi Straße, Schiene, Wasser geeignet sind. Der Aufbau und die Funktionsweise eines Portalkrans ist hinlänglich bekannt und ist z.B. in der US 2007/0289931 A1 anhand eines "ship-to-shore-Krans" beschrieben. Der Kran weist eine tragende Struktur bzw. ein Portal auf, auf dem ein Ausleger angeordnet ist. Dabei ist das Portal mit Rädern z.B. auf einem Gleis beweglich angeordnet und kann in einer Richtung bewegt werden. Der Ausleger ist fest mit dem Portal verbunden und am Ausleger wiederum ist eine entlang des Auslegers bewegliche Laufkatze angeordnet. Zur Aufnahme einer Fracht, z.B. eines ISO-Containers, ist die Laufkatze in der Regel mittels vier Seilen mit einem Lastaufnahmeelement, einem sogenannten Spreader, verbunden. Zur Aufnahme und Manipulation eines Containers kann der Spreader mittels Seilwinden gehoben oder gesenkt werden, hier mittels zweier Seilwinden für jeweils zwei Seile. Der Spreader kann auch an unterschiedlich große Container angepasst werden.

Um die Wirtschaftlichkeit von Logistik-Prozessen zu erhöhen, wird unter anderem ein sehr rascher Güterumschlag gefordert, d.h. z.B. sehr rasche Be- und Entladungsvorgänge von Frachtschiffen und entsprechend schnelle Bewegungsvorgänge der Lastaufnahmeelemente und der Portalkräne insgesamt. Solche schnellen Bewegungsvorgänge können aber dazu führen, dass sich unerwünschte Schwingungen, insbesondere Pendelbewegungen des Lastaufnahmeelements aufbauen, welche wiederum den Manipulationsvorgang verzögern, da die Container nicht präzise am vorgesehenen Ort platziert werden können.

Üblicherweise werden solche Kräne heutzutage von einem Kranführer bedient, der die Bewegung des Krans aus einer Kabine steuert, welche z.B. am Portal oder an der beweglichen Laufkatze angeordnet ist. Für eine schnelle, genaue und kollisionsfreie Manipulation der Güter sind hohe Anforderungen an den Kranführer gestellt, weshalb in der Regel zumindest eine ca. einjährige Ausbildungs- bzw. Einschulungszeit erforderlich ist. Insbesondere ein rasches Bewegen der Last mit möglichst geringen Pendelbewegungen ist eine sehr komplexe Tätigkeit, weshalb in der Regel eine längere Praxis-Erfahrung notwendig ist, um einen reibungslosen Betrieb zu ermöglichen. Eine zusätzliche Erschwernis der Tätigkeit als Kranführer ist die hohe körperliche Belastung aufgrund der hohen Konzentration verbunden mit langem Sitzen, z.B. nach unten geneigtem Blick und der psychischen Belastung durch immer stärker steigende Anforderungen an die Durchsatzzeit. Zur Gewährleistung eines durchgehenden vierundzwanzig Stunden Betriebs sind zudem mehrere, vorzugsweise erfahrene, Kranführer notwendig. Es ist daher ein klares Ziel der Automatisierungstechnik, die komplexen Manipulationsvorgänge eines Krans zumindest teilweise zu automatisieren, um den steigenden Anforderungen an kürzere Durchsatzzeiten sowie geringere Fehlerhäufigkeit (wie z.B. Kollisionen) gerecht zu werden, sowie die Tätigkeit eines Kranführers zu erleichtern. Die US 6 065 619 A beschreibt ein Verfahren zur Erzeugung einer Trajektorie eines Brückenkrans zur Bewegung einer Last zwischen zwei Punkten unter Vermeidung von Kollisionen mit Hindernissen, insbesondere mit gestapelten Containern wobei das Dokument ferner die Merkmale des Oberbegriffs von Anspruch 1 offenbart.

Es ist deshalb die Aufgabe der Erfindung, ein Verfahren zum Steuern einer Hebeeinrichtung anzugeben, das es ermöglicht, die Last effizient, automatisiert und kollisionsfrei zwischen zwei Punkten zu bewegen.

Die Aufgabe wird erfindungsgemäß dadurch gelöst, dass kinematische und geometrische Grenzwerte der Hebeeinrichtung vorgegeben werden, aus denen von der Recheneinheit, basierend auf der geometrischen oder verrundeten geometrischen oder glatten geometrischen Bahn, eine dynamische oder verrundete dynamische oder glatte dynamische Bahn berechnet wird, welche die zeitliche Information der Bewegung der Last entlang der geometrischen oder verrundeten geometrischen oder glatten geometrischen Bahn bereitstellt, und dass die geometrische oder verrundete geometrische oder glatte geometrische Bahn und die dynamische oder verrundete dynamische oder glatte dynamische Bahn zur Erzeugung der Trajektorie kombiniert werden. Weiters wird die Aufgabe durch eine Hebeeinrichtung mit zumindest zwei Bewegungsachsen zum Bewegen einer Last entlang einer Trajektorie gelöst. Durch das Verfahren ist es möglich, dass zur Manipulation der Last kein manueller Beitrag z.B. eines Kranführers mehr nötig ist. Zudem ist die Last entlang der erzeugten Trajektorie schnell und reproduzierbar bewegbar, was zu einer Zeitersparnis führt. Das Verfahren kann zudem für jede translatorische Hebeeinrichtung beliebiger Größe verwendet werden und aufgrund der standardisierten Trajektorie(n) mit bekannter Dauer kann das Verfahren z.B. auch in ein Container-Management Programm integriert werden, wodurch Be- und Entladeprozesse zeitlich genau geplant und damit optimiert werden können. Besonders vorteilhaft ist auch die Möglichkeit, die Trajektorie während des Manipulationsvorgangs so umzuplanen, dass z.B. der vorgegebene Endpunkt geändert werden kann oder ein schwingungsfreies Stoppen der Last auf der erzeugten Trajektorie möglich ist. Ganz besonders vorteilhaft ist es hierbei, wenn zur Erzeugung der Trajektorie jeweils die glatten Bahnen verwendet werden, weil damit Pendelschwingungen der Last während der Bewegung der Last entlang der Trajektorie zuverlässig minimiert werden können.

Es ist vorteilhaft, wenn der Anfangspunkt und der Endpunkt der Trajektorie in einer, von der ersten Achse und der zweiten Achse aufgespannten, ersten Ebene festgelegt werden, wobei die Verbotszonen in der ersten Ebene festgelegt werden, wobei die geometrische oder verrundete geometrische oder glatte geometrische Bahn in der ersten Ebene berechnet wird, wobei basierend auf der geometrischen oder verrundeten geometrischen oder glatten geometrischen Bahn, die dynamische oder verrundete dynamische oder glatte dynamische Bahn berechnet wird und wobei die geometrische oder verrundete geometrische oder glatte geometrische Bahn und die dynamische oder verrundete dynamische oder glatte dynamische Bahn zur Erzeugung der Trajektorie in der ersten Ebene kombiniert werden. Dadurch ist es möglich, eine optimale Trajektorie für beispielsweise einen Hallenkran zu erzeugen, der eine Hochachse und eine Längsachse aufweist.

In einer besonders vorteilhaften Ausgestaltung des Verfahrens wird die Last zusätzlich entlang einer dritten Bewegungsachse der Hebeeinrichtung bewegt, wobei der Anfangspunkt und der Endpunkt der Trajektorie in einer beliebigen, in einem von den drei Bewegungsachsen der Hebeeinrichtung aufgespannten Bewegungsraum liegenden, zweiten Ebene festgelegt werden, wobei die Verbotszonen in der zweiten Ebene festgelegt werden, wobei die geometrische oder verrundete geometrische oder glatte geometrische Bahn in der zweiten Ebene berechnet wird und wobei basierend auf der geometrischen oder verrundeten geometrischen oder glatten geometrischen Bahn, die dynamische oder verrundete dynamische oder glatte dynamische Bahn berechnet wird und die geometrische oder verrundete geometrische oder glatte geometrische Bahn und die dynamische oder verrundete dynamische oder glatte dynamische Bahn zur Erzeugung der Trajektorie in der zweiten Ebene kombiniert werden. Dadurch ist es möglich, eine beliebige zweidimensionale Trajektorie im Raum zu erzeugen. Beispielsweise kann für einen dreiachsigen Hafenkran eine optimale zweidimensionale Trajektorie in einer beliebigen Ebene für einen beliebig wählbaren Anfangs- und Endpunkt im Bewegungsraum generiert werden.

Gemäß einer weiteren vorteilhaften Ausgestaltung des Verfahrens wird die Last entlang einer dritten Bewegungsachse der Hebeeinrichtung bewegt, wobei der Anfangspunkt und der Endpunkt der Trajektorie in einem, von den drei Bewegungsachsen der Hebeeinrichtung aufgespannten Bewegungsraum, festgelegt werden, wobei die Verbotszonen im Bewegungsraum festgelegt werden, wobei die geometrische oder verrundete geometrische oder glatte geometrische Bahn im Bewegungsraum berechnet wird, wobei basierend auf der geometrischen oder verrundeten geometrischen oder glatten geometrischen Bahn, die dynamische oder verrundete dynamische oder glatte dynamische Bahn berechnet wird und wobei die geometrische oder verrundete geometrische oder glatte geometrische Bahn und die dynamische oder verrundete dynamische oder glatte dynamische Bahn zur Erzeugung der Trajektorie im Bewegungsraum kombiniert werden. Dadurch ist es möglich, eine optimale dreidimensionale Trajektorie im Raum zu erzeugen, sodass Hindernisse zeitoptimal mehrdimensional umfahren werden können.

Vorteilhafterweise wird ein begrenzter Arbeitsbereich der Hebeeinrichtung in der ersten Ebene, der zweiten Ebene oder im Bewegungsraum festgelegt und die Recheneinheit prüft, ob der Anfangspunkt, der Endpunkt und die Verbotszonen innerhalb des Arbeitsbereichs liegen und ob eine Trajektorie zwischen Anfangspunkt und Endpunkt erzeugt werden kann. Durch diese Plausibilisierung der Trajektorie-Generierung kann die Sicherheit erhöht werden, da bereits vor dem Bewegen der Last geprüft wird, ob die Trajektorie auf Basis der vorgegebenen Randbedingungen durchführbar ist.

Vorzugsweise werden als kinematische Grenzwerte der Hebeeinrichtung eine Maximalgeschwindigkeit und eine Maximalbeschleunigung der tragenden Struktur, eine Maximalgeschwindigkeit und eine Maximalbeschleunigung des Laufelements sowie eine Maximalgeschwindigkeit und eine Maximalbeschleunigung des Hubantriebs festgelegt und als geometrischer Grenzwert wird ein maximaler Auslenkwinkel des Lastaufnahmeelements festgelegt. Durch Festlegung dieser Grenzwerte werden die Randbedingungen für die Berechnung der dynamischen Bahn geschaffen, wodurch die Art und Ausführung der Hebeeinrichtung berücksichtigt werden kann.

Vorzugsweise wird zur Erzeugung der geometrischen Bahn der Anfangspunkt mit dem Endpunkt mittels Geraden über Stützpunkte verbunden, wobei die Stützpunkte aus den Verbotszonen abgeleitet werden. Damit kann ohne viel Rechenaufwand eine einfache geometrische Bahn als Grundlage für die gesamte Trajektorie erzeugt werden.

Es ist vorteilhaft, wenn zur Erzeugung der verrundeten geometrischen Bahn, die geometrische Bahn an den Stützpunkten verrundet wird. Durch diese bekannten geometrischen Formen bzw. Verrundungsmethoden, kann das Verfahren standardisiert werden.

Vorzugsweise wird die verrundete geometrische Bahn zur Erzeugung der glatten geometrischen Bahn mittels B-Splines geglättet. Durch die Erzeugung der glatten geometrischen Bahn kann eine stoß- und ruckfreie Bewegung der Last entlang der Trajektorie gewährleistet werden.

Vorteilhafterweise wird zur Erzeugung der verrundeten dynamischen Bahn die dynamische Bahn mittels einer Vorwärts-Rückwärts-Filterungsmethode verrundet. Zur Erzeugung der glatten dynamischen Bahn wird vorzugsweise die verrundete dynamische Bahn mittels B-Splines geglättet. Dadurch wird im Wesentlichen der zeitliche Bewegungsablauf der Last entlang der Trajektorie so festgelegt, dass keine unerwünschten Pendelbewegungen während der Bewegung auftreten

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt

Fig.1 eine schematische Darstellung eines Containerkrans mit einer Trajektorie innerhalb eines Arbeitsbereichs des Containerkrans,

Fig.2 eine geometrische Bahn einer Trajektorie innerhalb eines Arbeitsbereichs mit Verbotszonen,

Fig.3 eine dynamische Bahn einer Trajektorie,

Fig.4 eine Trajektorie in einer Ebene im Raum.

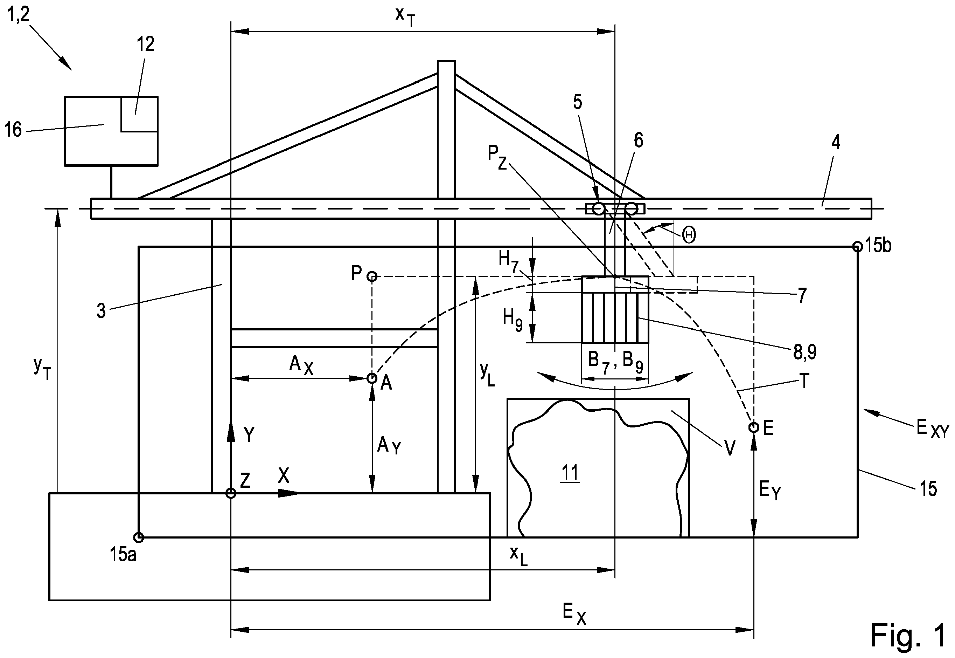

Fig.1 zeigt eine Hebeeinrichtung 1 beispielhaft anhand eines schematischen Containerkrans 2, der beispielsweise zum Be- und Entladen von Schiffen in einem Hafen verwendet wird. Üblicherweise weist ein Containerkran 2 eine tragende Struktur 3 auf, die entweder fest oder beweglich am Boden angeordnet ist. Im Falle einer beweglichen Anordnung kann die tragende Struktur 3 beispielsweise in Z-Richtung fahrbar auf Schienen angeordnet sein. Durch diesen Freiheitsgrad in Z-Richtung ist der Containerkran 2 örtlich flexibel einsetzbar. Zur Bewegung der tragenden Struktur 3 in Z-Richtung kann beispielsweise eine geeignete Verschiebeeinrichtung an der Hebeeinrichtung angeordnet sein, z.B. angetriebene Räder, ein Seilzug, ein Zahntrieb oder dergleichen. Die tragende Struktur 3 weist einen Ausleger 4 auf, der in einer bestimmten Höhe $y_T$ fest mit der tragenden Struktur 3 verbunden ist. Auf diesem Ausleger 4 ist üblicherweise ein Laufelement 5 angeordnet, das in Längsrichtung des Auslegers 4, also in dem dargestellten Beispiel in X-Richtung beweglich ist, beispielsweise kann ein Laufelement 5 mittels Rollen in Führungen gelagert sein. Für das Laufelement 5 ist ein nicht dargestellter Laufelementantrieb vorgesehen, um das Laufelement 5 in X-Richtung zu bewegen. Der Laufelementantrieb kann am Laufelement 5 selbst vorgesehen sein, kann aber auch am Ausleger 4 oder an der tragenden Struktur 3 angeordnet sein. Das Laufelement 5 ist üblicherweise mittels Halteelementen 6 mit einem Lastaufnahmeelement 7 zur Aufnahme einer Last 8 verbunden. Im Falle eines Containerkrans 2 ist die Last 8 üblicherweise ein Container 9, in den meisten Fällen ein ISO-Container mit einer Länge von 20, 40 oder 45 Fuß, einer Breite von 8 Fuß und einer Höhe von 8 Fuß, 6 Zoll. Es existieren aber auch Lastaufnahmeelemente 7, die geeignet sind, gleichzeitig zwei Container 9 nebeneinander aufzunehmen (sogenannte Dual-Spreader). Die Halteelemente 6 sind üblicherweise als Seile ausgeführt, wobei in den meisten Fällen vier Halteelemente 6 am Laufelement 5 angeordnet sind, es können aber auch mehr oder weniger Halteelemente 6 vorgesehen sein, im einfachsten Fall auch nur ein Halteelement 6. Zur Aufnahme einer Last 8, wie z.B. eines Containers 9, ist der Abstand zwischen Laufelement 5 und Lastaufnahmeelement 7 mittels eines Hubantriebs (nicht dargestellt) verstellbar, in Fig.1 in Y-Richtung. Wenn die Halteelemente 6 als Seile ausgeführt sind, wird die Hubhöhe üblicherweise mittels einer oder mehrerer Seilwinden verstellt.

Zur Manipulation von Lasten 8, z.B. Containern 9 kann die Hebeeinrichtung 1, z.B. der Containerkran 2 also in Richtung von zumindest zwei Achsen (X, Y), vorzugsweise drei Achsen (X, Y, Z) bewegt werden. In der Regel weist die Hebeeinrichtung 1 auch eine Kransteuerung 16 auf, z.B. in Form einer elektronischen Steuereinheit in Form von geeigneter Hardware und Software, über welche die Bewegung der Last 8 in der jeweiligen Achse X, Y, Z gesteuert werden kann. Die Kransteuerung 16 kommuniziert dazu mit den entsprechenden Antrieben. Die Kransteuerung 16 ist üblicherweise so ausgeführt, dass die aktuelle Position des Laufelements 5 und des Lastaufnahmeelements 7, und gegebenenfalls auch der tragenden Struktur 3 erfasst werden kann. In Fig.1 also beispielsweise die Koordinaten eines, an der dem Ausleger 4 zugewandten Oberseite des Lastaufnahmeelements 7 angeordneten, Zentralpunktes $P_Z$ in der dargestellten X-Y-Ebene $E_{XY}$ mit der Position $x_L$ und Position $y_L$ des Lastaufnahmeelements 7 in X-Richtung sowie Y-Richtung und der Position $x_T$ und $y_T$ des Laufelements 5 in X-Richtung sowie Y-Richtung (wobei die Position $y_T$ des Laufelements in Y-Richtung oftmals durch die konstruktive Höhe der tragenden Struktur 3 bzw. des Auslegers 4 definiert und konstant ist). Die Positionen sind auf ein gegebenes Koordinatensystem bezogen. Bei Bewegung der Last 8 in Z-Richtung, also bei einer Bewegung der tragenden Struktur 3 der Hebeeinrichtung 1 in Z-Richtung würde auch die Position $z_L$ des Lastaufnahmeelements 7 bzw. die Position $z_T$ des Laufelements 5 in Z-Richtung erfasst werden.

Aufgrund von schnellen Bewegungsabläufen des Containers 9 oder Windeinflüssen, kann es vorkommen, dass das an den Halteelementen 6 angeordnete Lastaufnahmeelement 7 mit dem daran angeordneten Container 9 zu Schwingungen angeregt wird, insbesondere zu Pendelbewegungen, hier in der X-Y-Ebene $E_{XY}$, wie z.B. anhand des Doppelpfeils in Fig.1 dargestellt ist. Eine Bewegung des Krans in Z-Richtung kann entsprechend zu einer Pendelbewegung in der Z-Y-Ebene führen. Bei gleichzeitiger Bewegung der Last 8 in Z-Richtung und X-Richtung, also bei Bewegung der tragenden Struktur 3 und des Laufelements 5 sind aber auch kombinierte Pendelbewegungen in einer von der X-Y-Ebene oder der Z-Y-Ebene abweichenden vertikalen Ebene möglich. Ein erfahrener Kranführer wird in der Regel versuchen, diese Pendelbewegungen zu vermeiden bzw. so gering wie möglich zu halten, um eine schnelle und präzise Manipulation der Last 8 von einem Anfangspunkt A zu einem bestimmten Endpunkt E entlang einer sogenannten Trajektorie T durchführen zu können.

Beim Beladen eines Schiffes kann der Anfangspunkt A z.B. eine Position eines bestimmten Containers 9 an Land sein, wie ein LKW-Anhänger, Bahn-Waggon oder Lagerplatz, und die Endposition E kann z.B. eine bestimmte vorgegebene Position des Containers 9 am Schiff sein. Beim Entladen des Schiffs wären natürlich der Anfangspunkt A am Schiff und der Endpunkt E an Land. Um die Zeit für die Durchführung der Manipulation so kurz wie möglich zu halten, wird der Kranführer in der Regel versuchen, einen möglichst direkten Weg zwischen dem Anfangspunkt A und dem Endpunkt E zu wählen, im Idealfall ist die Trajektorie T also eine Gerade.

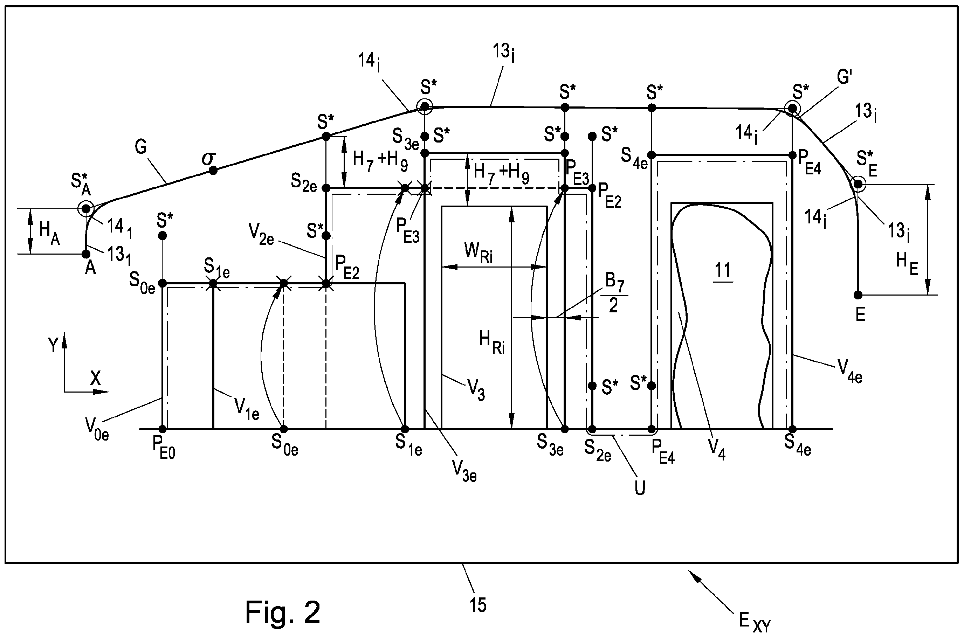

Wie in Fig.1 dargestellt, kann es aber vorkommen, dass zwischen Anfangspunkt A und Endpunkt E ein Hindernis 11 angeordnet ist. Das Hindernis 11 könnte z.B. ein anderes Schiff, übereinander gestapelte Container 9 oder ein sonstiges Hindernis 11 sein. Das Hindernis 11 führt natürlich dazu, dass keine direkte Verbindung zwischen dem Anfangspunkt A und dem Endpunkt E, also keine Trajektorie T in Form einer Geraden möglich ist, wie in Fig. 1 ersichtlich ist. Die tatsächliche Trajektorie T hängt natürlich stark vom Kranführer ab, der den Kran bedient und könnte z.B. so aussehen wie in Fig. 1, also im Wesentlichen einen kurvenförmigen Verlauf zwischen Anfangspunkt A und Endpunkt E aufweisen, wie anhand der gestrichelten Linie dargestellt ist. Im einfachsten Fall könnte die Trajektorie T aber auch eine Aneinanderreihung von geraden Abschnitten sein, wie in Fig. 1 anhand der strichpunktierten Linie dargestellt ist. Dabei würde die Last also beispielsweise zuerst nur vertikal in Y-Richtung angehoben werden, dann nur horizontal in X-Richtung bewegt werden und schließlich zur Erreichung des Endpunktes E wieder nur vertikal gesenkt werden. Dieser Bewegungsvorgang ist allerdings nachteilig, weil eine, im Vergleich zur kurvenförmigen Trajektorie T, längere Strecke zurückgelegt werden muss, was zu einer längeren Dauer des Manipulationsvorgangs führt. Zudem neigt das Lastaufnahmeelement 7 mit daran angeordnetem Container 9 durch den abrupten Richtungswechsel z.B. in Punkt P, von rein vertikaler Bewegung zu rein horizontaler Bewegung, stärker zu einer Pendelbewegung, die in der Regel vom Kranführer ausgeglichen werden muss, was zusätzlichen Zeitaufwand bedeutet. Ziel ist es also, für die Steuerung der Hebeeinrichtung 1 eine möglichst kurze und glatte Trajektorie T zwischen dem Anfangspunkt A und dem Endpunkt E zu schaffen, die einen automatisierten und kollisionsfreien Bewegungsvorgang mit möglichst geringer Pendelbewegung ermöglicht. Beispielhaft ist das erfindungsgemäße Verfahren anhand einer ersten Trajektorie T in der X-Y-Ebene $E_{XY}$ der Hebeeinrichtung 1 in Fig. 2 dargestellt.

Erfindungsgemäß ist vorgesehen, dass der Anfangspunkt A und der Endpunkt E der Trajektorie T sowie Verbotszonen $V_i$ festgelegt werden, die während der Bewegung der Last 8 von der Last 8 vermieden werden, dass daraus von einer Recheneinheit 12 eine geometrische Bahn G oder eine verrundete geometrische Bahn G' oder eine glatte geometrische Bahn G", wie nachfolgend ausgeführt, berechnet wird, dass kinematische und geometrische Grenzwerte der Hebeeinrichtung 1 vorgegeben werden, aus denen von der Recheneinheit 12, basierend auf der geometrischen oder verrundeten geometrische oder glatten geometrischen Bahn G, G', G" eine dynamische Bahn D oder eine verrundete dynamische Bahn D' oder eine glatte dynamische Bahn D", wie nachfolgend beschrieben, berechnet wird, welche die zeitliche Information der Bewegung der Last 8 entlang der geometrischen oder verrundeten geometrischen oder glatten geometrischen Bahn G, G', G" bereitstellt und dass die geometrische oder verrundete geometrische oder glatte geometrische Bahn G, G', G" und die dynamische oder verrundete dynamische oder glatte dynamische Bahn D, D', D" zur Erzeugung der Trajektorie T kombiniert werden. Die Recheneinheit 12 kann z.B. eine geeignete Hardware mit geeigneter Software sein oder auch als Software z.B. in der Kransteuerung 16 integriert sein.

In Fig.2 sind zur einfacheren Darstellung nur die Trajektorie T mit Anfangspunkt A, Endpunkt E und die Verbotszonen $V_i$ dargestellt (der Index i bezieht sich dabei auf die Anzahl der Verbotszonen $V_i$). Die Koordinaten $A_X$, $A_Y$ des Anfangspunkts A sowie die Koordinaten $E_X$, $E_Y$ des Endpunkts E werden in der Ebene $E_{XY}$ festgelegt. Beispielsweise kann der Anfangspunkt A durch einen zu bewegenden Container 9 vorgegeben sein und der Endpunkt E durch eine Position, an der der Container 9 wieder abgeladen werden soll. Eine Verbotszone $V_i$ steht stellvertretend für ein Hindernis 11 oder einen Bereich, der während der Bewegung der Last 8 entlang der Trajektorie T von der Last 8 nicht berührt werden soll bzw. darf, beispielsweise um eine Kollision zu vermeiden oder ausreichend Sicherheitsabstand zu Personen zu gewährleisten.

Je nach Anwendungsgebiet der Hebeeinrichtung 1 können verschiedene Hindernisse 11 zwischen Anfangspunkt A und Endpunkt E angeordnet sein. Die Anzahl, Art und Ausgestaltung der Hindernisse 11 spielt für die Erfindung keine Rolle, es könnte z.B. nur ein Hindernis 11 angeordnet sein, mehrere unterschiedlich große Hindernisse 11 oder auch gar kein Hindernis 11. Wichtig ist nur, dass anhand der Hindernisse 11 und/oder anderweitig verbotenen Bereichen die Verbotszonen $V_i$ definiert werden können, welche von der Last 8 während der Bewegung der Last 8 entlang der Trajektorie T vermieden werden. Die Verbotszonen $V_i$ können sich auch überschneiden. In Fig.2 sind beispielhaft zwei der fünf Verbotszonen $V_0$-$V_4$ dargestellt ($V_3$, $V_4$).

Die Verbotszonen $V_i$ und auch der Anfangs- und Endpunkt A, E können entweder manuell durch einen Benutzer z.B. über eine geeignete Schnittstelle in der Recheneinheit 12 definiert werden oder automatisch von der Recheneinheit 12 ermittelt werden. Dazu kann beispielsweise ein geeignetes Laser-Scan Verfahren verwendet werden, das z.B. einen Arbeitsbereich 15 der Hebeeinrichtung 1 abtastet und dabei Hindernisse 11 erkennt, vermisst und die ermittelten Daten an die Recheneinheit 12 weitergibt. Solche Verfahren sind im Stand der Technik bekannt.

Zur Definition der Verbotszonen $V_i$ kann z.B. eine Umhüllende des Hindernisses 11 in Form eines Rechtecks verwendet werden, welches das Hindernis 11 vollständig einschließt, wie in Fig.1 und Fig.2 dargestellt ist. Dabei entspricht die Höhe $H_{Ri}$ des Rechtecks der maximalen Erstreckung des Hindernisses 11 in Y-Richtung und die Breite $W_{Ri}$ des Rechtecks der maximalen Erstreckung des Hindernisses 11 in X-Richtung (der Index i bezieht sich dabei wiederum auf die Anzahl der Verbotszonen $V_i$). Dies ist natürlich nur beispielhaft zu verstehen, es wären auch andere geometrische Festlegungen der Verbotszonen $V_i$ denkbar. Dies kann beispielsweise von einer einzigen verbotenen Zone V, die mehrere Hindernisse 11 umschließt, bis hin zu einer feineren Definition mehrerer Verbotszonen $V_i$ führen, z.B. anhand des konkreten Umrisses eines Hindernisses 11. Dabei sollte der Aufwand für die Detaillierung der Verbotszonen $V_i$ so gering wie möglich und so genau wie nötig gehalten werden, um ein effizientes Verfahren zur Erzeugung der Trajektorie T zu ermöglichen.

Auf Basis der Verbotszonen $V_i$ werden von der Recheneinheit 12 eine Zahl von Stützpunkten $S_{ie}$ berechnet. Bei der Berechnung der Stützpunkte $S_{ie}$ kann z.B. die Größe der Last 8 berücksichtigt werden, am Beispiel eines Containerkrans 2 also z.B. die Abmessungen eines Standard ISO-Containers, um jedenfalls einen Mindestabstand zu den Verbotszonen $V_i$ bzw. Hindernissen 11 zu gewährleisten. Wenn sich die Koordinaten des Lastaufnahmeelements 7 wie beschrieben auf den Zentralpunkt $P_Z$ des Lastaufnahmeelements 7 beziehen, sind auch die Abmessungen des Lastaufnahmeelements 7 zu berücksichtigen. Beispielsweise kann es bei einer Leerfahrt ohne Container 9 ausreichend sein, nur die Abmessungen des Lastaufnahmeelements 7 bei der Berechnung der Stützpunkte $S_{ie}$ zu berücksichtigen, sodass das Lastaufnahmeelement 7 entlang einer Trajektorie T bewegt werden kann, die näher an den Verbotszonen $V_i$ liegt, als eine Trajektorie T mit Container 9, wodurch der Weg und dadurch die Zeit zur Manipulation verringert werden können.

Um einen Mindestabstand der Last 8 z.B. des Containers 9 zu den Verbotszonen $V_i$ zu gewährleisten, d.h. um jedenfalls eine Kollision der Last 8 mit einem Hindernis 11 zu vermeiden, werden im dargestellten Beispiel in der Ebene $E_{XY}$ z.B. die Höhe $H_7$ des Lastaufnahmeelements 7 und die Höhe $H_9$ des Containers in Y-Richtung zur Höhe $H_{Ri}$ der rechteckigen Verbotszone $V_i$ addiert und es wird an beiden Seiten (in X-Richtung) der Verbotszone $V_i$ die halbe Breite $B_7$ des Lastaufnahmeelements 7 (entspricht üblicherweise der halben Breite $B_9$ des Containers 9) zur Breite $W_{Ri}$ der verbotenen Zone $V_i$ addiert, wie in Fig.2 anhand der Verbotszone $V_3$ dargestellt ist. Bei unterschiedlichen Breiten des Lastaufnahmeelements 7 und des Containers 9 ($B_7 \neq B_9$) wird vorzugsweise die größere der beiden Breiten verwendet. Je nach gewünschtem Sicherheitsabstand kann die Größe einer Verbotszone $V_i$ aber auch größer festgelegt werden. Durch die Berücksichtigung der Abmessungen des Containers 9 und des Lastaufnahmeelements 7 erhält man eine erweiterte Verbotszone $V_{ie}$ im konkreten Beispiel z.B. die erweiterte Verbotszone $V_{3e}$.

Die links oberen und rechts unteren Eckpunkte der erweiterten Verbotszonen $V_{ie}$ (also der Rechtecke im dargestellten Beispiel) bilden die Stützpunkte $S_{ie}$. Die Stützpunkte $S_{ie}$ werden sortiert und es werden jene Stützpunkte $S_{ie}$ verworfen, die für die Erzeugung der geometrischen Bahn G irrelevant sind. Dazu werden z.B. die unteren Stützpunkte $S_{ie}$ einer erweiterten Verbotszone $V_{ie}$, die von einer überlagerten und in Y-Richtung höher liegenden erweiterten Verbotszone $V_{ie}$ abgedeckt sind, auf die Höhe dieser höher liegenden erweiterten Verbotszone $V_{ie}$ gebracht, wie in Fig. 2 anhand der Pfeile an den Stützpunkten $S_{0e}$, $S_{1e}$, $S_{3e}$ dargestellt ist. Stützpunkte $S_{ie}$, die danach redundant sind, werden entfernt (in Fig.2 durch die Kreuze in den entsprechenden Stützpunkten symbolisiert). Als redundant sind in diesem Beispiel Stützpunkte $S_{ie}$ zu verstehen, die in Y-Richtung gesehen auf der gleichen Höhe und nicht auf einem Eckpunkt einer erweiterten Verbotszone $V_{ie}$ liegen. Die verbleibenden Stützpunkte $S_{ie}$ und die restlichen freiliegenden Eckepunkte $P_{Ei}$ am Umriss U (in Fig. 2 als strichpunktierte Linie dargestellt) der erweiterten Verbotszonen $V_{ie}$, also jene am Umriss U der erweiterten Verbotszonen $V_{ie}$ liegenden Eckpunkte $P_{Ei}$, die nicht von einer erweiterten Verbotszone $V_{ie}$ überdeckt sind - das sind im vorliegenden Beispiel die Eckpunkte $P_{E2}$, $P_{E3}$, $P_{E4}$, werden vorzugsweise noch um die Höhe $H_9$ des Containers sowie die Höhe $H_7$ des Lastaufnahmeelements 7 in Y-Richtung nach oben verschoben, um zusätzlich zum beschriebenen Mindestabstand noch einen Sicherheitsabstand der Trajektorie T von den Verbotszonen $V_i$ und damit von den Hindernissen 11 vorzusehen. Man erhält die verschobenen Stützpunkte $S^*$. Nicht verschoben werden der in X-Richtung am weitesten links, also am nächsten zum Anfangspunkt A, liegende untere Eckpunkt $P_{Ei}$ und der am weitesten rechts, also am nächsten zum Endpunkt E, liegende untere Stützpunkt $S_{ie}$ (im vorliegenden Beispiel der links untere Eckpunkt $P_{E0}$ der erweiterten Verbotszone $V_{0e}$ und der rechts untere Stützpunkt $S_{4e}$ der erweiterten Verbotszone $V_{4e}$). Dieser Schritt ist nicht zwingend notwendig, aber vorteilhaft, z.B. um Kollisionen sicher zu vermeiden oder etwaig auf einem Hindernis 11 stehende Personen zu schützen. Der Sicherheitsabstand könnte natürlich auch größer oder kleiner gewählt werden. Der Anfangspunkt A und der Endpunkt E werden im dargestellten Beispiel ebenfalls jeweils um eine bestimmte Höhe $H_A$ bzw. $H_E$ in Y-Richtung nach oben verschoben, man erhält die Stützpunkte $S_A{}^*$ und $S_E{}^*$, wie in Fig. 2 ersichtlich. Die Verschiebung des Anfangspunkts A und des Endpunkts E dient im Wesentlichen dazu, zu Beginn der Bewegung der Last 8 eine rein vertikale Hubbewegung ausgehend vom Anfangspunkt A durchführen zu können und am Ende der Bewegung der Last 8 ein rein vertikales Senken der Last 8 bis zum Endpunkt E zu ermöglichen. Auf Basis dieser verschobenen Stützpunkte $S^*$, $S_A{}^*$, $S_B{}^*$ sowie des Angangspunkts A und Endpunkts E wird eine Einhüllende, eine sogenannte konvexe Hülle ermittelt. Zur Ermittlung der konvexen Hülle gibt es verschiedene bekannte Verfahren, beispielsweise das bekannte Graham-Scan-Verfahren.

Die nach Durchführung des Graham-Scan-Verfahrens verbleibenden Stützpunkte $S^*$, $S_A{}^*$, $S_B{}^*$ (in Fig.2 durch den Kreis um den jeweiligen Punkt gekennzeichnet) bilden zusammen mit dem Anfangspunkt A und dem Endpunkt E die konvexe Hülle und werden durch Geraden $13_i$ miteinander verbunden, wodurch eine geometrische Bahn G erzeugt wird, wie in Fig.2 ersichtlich. Die geometrische Bahn beschreibt damit nur die Geometrie, enthält aber keinerlei dynamische Information der Bewegung der Last 8, wie beispielsweise Geschwindigkeiten, Beschleunigungen, usw.

Um eine Trajektorie T zu generieren, der die Last 8 mit möglichst geringen Pendelbewegungen folgen kann, um also einen gleichmäßigen Bewegungsablauf ohne sprunghafte Richtungsänderungen zu ermöglichen, wird die geometrische Bahn G an den verbliebenen Stützpunkten $S^*$, $S_A{}^*$, $S_B{}^*$ (also an den Schnittpunkten der Geraden $13_i$) vorzugsweise verrundet. Die Verrundung kann z.B. mittels einfachen Kreissegmenten $14_i$ (wie in Fig.2 dargestellt), mittels Bezier-Kurven, Klothoiden, oder auch anderen bekannten, geeigneten Methoden erfolgen. Nach erfolgter Verrundung wird die resultierende verrundete geometrische Bahn G' vorzugsweise mit sogenannten bekannten B-Splines abgetastet (in Fig.2 nicht dargestellt). Dadurch wird eine Glattheit zur Erzeugung der glatten geometrischen Bahn G" erreicht, wodurch die glatte geometrische Bahn G"in jeder Bewegungsrichtung (im Beispiel X-bzw. Y-Richtung) vierfach stetig geometrisch differenzierbar ist.

Schließlich erhält man die glatte geometrische Bahn G" mit dem Bahnparameter $\sigma$ und entsprechenden Koordinaten $x(\sigma)$, $y(\sigma)$ in der Ebene $E_{XY}$. Die beschriebene schrittweise Erzeugung der glatten geometrischen Bahn G" ist aber nur beispielhaft zu verstehen, es sind auch andere Methoden denkbar, die eine Erzeugung einer glatten geometrischen Bahn G" (im Sinne einer mehrfachen, insbesondere vierfachen, stetigen geometrischen Differenzierbarkeit (in X, Y-Richtung)) ermöglichen. Im dargestellten Beispiel wird zur Modellierung der Hebeeinrichtung 1 eine Pendelgleichung eines einfachen Pendels verwendet, wie nachfolgend noch näher beschrieben wird. Aus der Pendelgleichung ergibt sich das Erfordernis einer vierfach stetig geometrischen Differenzierbarkeit der glatten geometrischen Bahn G". Bei einer alternativen Modellierung der Hebeeinrichtung 1 könnte sich aber auch eine andere Anforderung an die glatte geometrische Bahn G" ergeben, z.B. eine stetige geometrische Differenzierbarkeit höherer oder niedrigerer Ordnung, als bei der gezeigten Pendelgleichung.

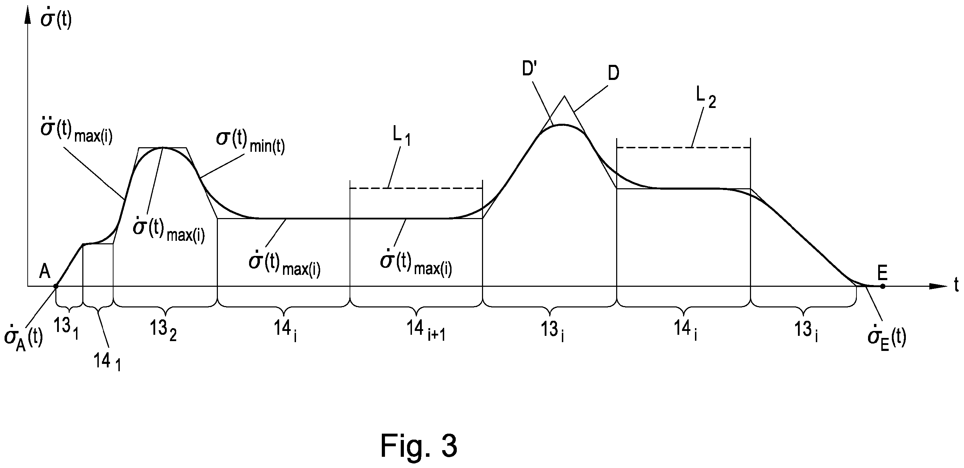

Schließlich berechnet die Recheneinheit 12 auf Basis der geometrischen Bahn G (oder der verrundeten geometrischen Bahn G' oder der glatten geometrischen Bahn G") eine dynamische Bahn D, welche die zeitliche Information der Trajektorie T zur Verfügung stellt, sodass man einen zeitabhängigen Bahnparameter $\sigma(t)$ mit der Bahngeschwindigkeit $\dot{\sigma}(t)$ als zeitliche Ableitung erhält, wie in Fig.3 dargestellt ist. Die zeitliche Information beschreibt somit, wann die Last 8 wo entlang der Trajektorie T sein soll. Das wird durch dynamische Parameter der Bewegung der Last 8, beispielsweise Geschwindigkeit, Beschleunigung, Ruck, Stoß, abgebildet.

Die Berechnung der dynamischen Bahn D erfolgt basierend auf vorgegebenen kinematischen und geometrischen Grenzwerten der Hebeeinrichtung 1, welche der Recheneinheit 12 vorgegeben werden, und der geometrischen Bahn G (oder der verrundeten geometrischen Bahn G' oder der glatten geometrischen Bahn G"). Diese kinematischen Grenzwerte sind vorzugsweise eine Maximalgeschwindigkeit $v_{Tmax}$ und eine Maximalbeschleunigung $a_{Tmax}$ des Laufelements 5 in der Ebene $E_{XY}$ und eine Maximalgeschwindigkeit $v_{Hmax}$ und eine Maximalbeschleunigung $a_{Hmax}$ des Hubantriebs in Y-Richtung. Ein geometrischer Grenzwert ist z.B. ein maximaler Auslenkwinkel $\Theta_{XYmax}$ des Lastaufnahmeelements 7 in der Ebene $E_{XY}$. Bei einer dritten Bewegungsrichtung der Hebeeinrichtung in Z-Richtung können zusätzlich eine Maximalgeschwindigkeit $v_{Smax}$ und eine Maximalbeschleunigung $a_{Smax}$ der tragenden Struktur 3 als kinematische Grenzwerte und ein maximaler Auslenkwinkel $\Theta_{ZYmax}$ des Lastaufnahmeelements 7 in der Ebene $E_{ZY}$ als geometrischer Grenzwert vorgegeben werden.

Die Grenzwerte werden verwendet, um für die einzelnen Abschnitte der geometrischen Bahn G entsprechende dynamische Grenzwerte zu ermitteln. Dabei kann auch die verrundete geometrische Bahn G' oder die glatte geometrische Bahn G" verwendet werden. Bei diesem Schritt werden also aus den kinematischen und geometrischen Grenzwerten der verfügbaren Bewegungsrichtungen der Hebeeinrichtung 1 dynamische Grenzwerte für den Bahnparameter $\sigma$ anhand der geometrischen Bahn G (oder der verrundeten geometrischen Bahn G' oder der glatten geometrischen Bahn G") ermittelt. Unter dynamischen Grenzwerten sind maximale Bewegungsgrößen (z.B. Geschwindigkeit, Beschleunigung) der Last 8 bei der Bewegung entlang der Trajektorie T zu verstehen, welche durch den konstruktiven Aufbau der Hebeeinrichtung vorgegeben sind. Das bedeutet, dass die Last 8 nur so schnell bewegt werden kann, wie es die, für die Bewegung zuständigen Komponenten der Hebeeinrichtung 1 ermöglichen. Beispielsweise sind die maximale Geschwindigkeit und die maximale Beschleunigung der Last 8 in Y-Richtung im Wesentlichen durch die konkrete Ausgestaltung des Hubantriebs limitiert wie z.B. durch die Leistung und das Drehmoment eines Elektromotors einer Seilwinde des Hubantriebs).

Zur Vereinfachung der Berechnung wird im gezeigten Beispiel die dynamische Bahn D auf Basis der verrundeten geometrischen Bahn G' herangezogen, weil diese verrundete geometrische Bahn G' definierte geometrische Abschnitte (Geraden $13_i$ und Kreissegmente $14_i$) aufweist. Nach der B-Spline-Abtastung erhält man eine glatte geometrische Bahn G" höherer Ordnung, was die Berechnung der dynamischen Bahn erschweren würde. Vorzugsweise wird zudem die Annahme getroffen, dass eine Beschleunigung der Last 8 nur auf Geraden $13_i$ möglich ist, nicht aber auf Kurvensegmenten $14_i$. Natürlich könnte aber auch auf den Kurvensegmenten $14_i$ eine Beschleunigung oder Verzögerung erfolgen und die dynamische Bahnplanung könnte auf Basis der glatten geometrischen Bahn G" nach der B-Spline-Abtastung erfolgen, beides würde jedoch den Rechenaufwand erhöhen.

In Fig.3 ist eine, aus der verrundeten geometrischen Bahn G' aus Fig.2 abgeleitete, dynamische Bahn D beispielhaft anhand eines Diagramms mit der Bahngeschwindigkeit $\dot{\sigma}(t)$ über der Zeit t dargestellt, wobei die dynamischen Grenzwerte der einzelnen Abschnitte ersichtlich sind. Die dynamische Bahnplanung erfolgt im ersten Schritt ruckunbeschränkt, d.h. maximal mit der zweiten zeitlichen Ableitung des Bahnparameters $\sigma(t)$, also der Bahnbeschleunigung $\ddot{\sigma}(t)$, wie in Fig.3 ersichtlich ist. Daher müssen als Grenzwerte nur Geschwindigkeiten und Beschleunigungen vorgegeben werden. Auf Geraden $13_i$ wird die Bewegung der Last 8 beispielsweise durch eine maximale Bahngeschwindigkeit $\dot{\sigma}(t)_{max(i)}$ sowie eine maximale und minimale Bahnbeschleunigung (bzw. Bahnverzögerung) $\ddot{\sigma}(t)_{max(i)}$, $\ddot{\sigma}(t)_{min(i)}$ begrenzt. Auf Kreissegmenten $14_i$ wird die Bewegung der Last 8 beispielsweise nur durch eine maximale Bahngeschwindigkeit $\dot{\sigma}(t)_{max(i)}$ begrenzt, eine Beschleunigung oder Verzögerung auf Kreissegmenten $14_i$ ist gemäß der getroffenen Annahme im Beispiel nicht vorgesehen, wäre aber ebenfalls denkbar.

Die von der geometrischen Bahn G abgeleitete verrundete geometrische Bahn G' in Fig.2 startet im Anfangspunkt A mit einer ersten vertikalen Geraden $13_1$ und geht dann in ein erstes Kreissegment $14_1$ über. Gemäß den getroffenen Annahmen kann am Kreissegment $14_1$ die Bahngeschwindigkeit nicht erhöht oder verringert werden. Das Kreissegment $14_1$ geht auf eine zweite Gerade $13_2$ über usw. Auf der Geraden $13_i$ ist eine Bahnbeschleunigung zulässig. Daher wird mit der maximale Bahnbeschleunigung $\ddot{\sigma}(t)_{max(i)}$ beschleunigt, bis die maximal zulässige Bahngeschwindigkeit $\dot{\sigma}(t)_{max(i)}$ erreicht ist. Auf dem folgenden Kreissegment $14_i$ ist eine maximal zulässige Bahngeschwindigkeit $\dot{\sigma}(t)_{max(i)}$ definiert, die niedriger ist, als auf einer Geraden $13_i$. Daher wird mit der maximalen Bahnverzögerung $\ddot{\sigma}(t)_{min(i)}$ verzögert, um die maximal zulässige Bahngeschwindigkeit $\dot{\sigma}(t)_{max(i)}$ auf dem folgenden Kreissegment $14_i$ zu erreichen. Auf diese Weise wird aus der gesamten verrundeten geometrischen Bahn G' mit den vorgegebenen Grenzwerten eine ruckunbeschränkte dynamische Bahn D erzeugt.

Wie in Fig. 3 anhand der gestrichelten Linie $L_1$ dargestellt ist, könnte bei aufeinanderfolgenden Kreissegmenten $14_i$, $14_{i+1}$ die Bewegung auf dem Kreissegment $14_{i+1}$ z.B. auch mit höherer Geschwindigkeit erfolgen, sofern die dynamischen Grenzwerte dies erlauben. Im beschriebenen Beispiel wird darauf allerdings verzichtet und das Kreissegment $14_{i+1}$ wird mit der gleichen Geschwindigkeit durchfahren wie das Kreissegment $14_i$. Analog dazu wäre z.B., wie anhand der gestrichelten Linie $L_2$ dargestellt ist, im gezeigten Beispiel am Kreissegment $14_i$ eine höhere Geschwindigkeit möglich, weil die kinematischen und geometrischen Grenzwerte der Hebeeinrichtung 1 das erlauben. Allerdings muss in diesem Fall die Geschwindigkeit am Kreissegment $14_i$ begrenzt werden, um mittels der, durch die kinematischen und geometrischen Grenzwerte der Hebeeinrichtung 1 vorgegebene, maximal möglichen Verzögerung auf der nachfolgenden Geraden $13_i$, die geforderte Bedingung des Stillstandes der Last 8 im Endpunkt E, also Endgeschwindigkeit $\dot{\sigma}(t) = 0$ zu erfüllen.

Die Höhe der dynamischen Grenzwerte kann natürlich unterschiedlich groß sein und ist von der jeweiligen Gerade $13_i$ bzw. dem jeweiligen Kreissegment $14_i$ der verrundeten geometrischen Bahn G' abhängig. Z.B. wird die maximale Bahngeschwindigkeit $\dot{\sigma}(t)_{max(i)}$ auf Kreissegmenten $14_i$ mit dem Radius des Kreissegments $14_i$ steigen. Bei einer Geraden $14_i$ hängt die maximale Bahngeschwindigkeit $\dot{\sigma}(t)_{max(i)}$ z.B. vom Verhältnis der Geschwindigkeitskomponenten in X- bzw. Y-Richtung ab. Bei einer rein vertikale Bewegung der Last 8 sind beispielsweise vorrangig die kinematischen Grenzwerte des Hubantriebs maßgebend, bei einer rein horizontalen Bewegung der Last 8 sind im Wesentlichen die kinematischen Grenzwerte des Laufelements 5 (bzw. in Z-Richtung der Verschiebeeinrichtung der tragenden Struktur 3) maßgebend.

Vorzugsweise erfolgt die dynamische Bahnplanung in einem ersten Schritt ohne Beschränkung des Rucks , in einem nächsten Schritt erfolgt eine Verrundung der erzeugten dynamischen Bahn D mit einem geeigneten bekannten Verfahren, beispielsweise durch Filterung, z.B. mittels einer Vorwärts-/Rückwärts-Filterung (Zero-Phase-Filterung - FIR) oder eines anderen geeigneten Filterungsverfahrens. Dadurch erhält man eine verrundete dynamische Bahn D', wie in Fig.3 dargestellt ist, die mehrfach (im gezeigten Beispiel 3-fach) stetig differenzierbar ist. Vorzugsweise wird die verrundete dynamische Bahn D' schließlich, analog der verrundeten geometrischen Bahn G', z.B. mittels B-Splines abgetastet, um mehrfach (im gezeigten Beispiel 4-fach) stetig zeitlich differenzierbar zu sein (die zeitlichen Ableitungen des Bahnparameters $\sigma(t)$ sind die Bahngeschwindigkeit $\dot{\sigma}(t)$, die Bahnbeschleunigung $\ddot{\sigma}(t)$, der Bahnruck $\dddot{\sigma}(t)$ und der Bahnstoß $\sigma^{(4)}(t)$), wodurch man eine glatte dynamische Bahn D" erhält (in Fig.3 nicht dargestellt).

Im anhand Fig.3 dargestellten Beispiel der verrundeten dynamischen Bahn D' ist ersichtlich, dass die Last 8 im Anfangspunkt A aus dem Stillstand, also mit einer Anfangsgeschwindigkeit $\dot{\sigma}_A(t) = 0$ startet. Dies ist nur beispielhaft und nicht zwingend notwendig, die Last 8 könnte auch mit einer Anfangsgeschwindigkeit $\dot{\sigma}_A(t) \neq 0$ wegbewegt werden. Eine Anfangsgeschwindigkeit $\dot{\sigma}_A(t) \neq 0$ könnte vorteilhafterweise dazu genutzt werden, z.B. das üblicherweise unbekannte Gewicht des zu bewegenden Containers 9 zu ermitteln. Beispielsweise könnte ein Kranführer den Container aus dem Stillstand zuerst manuell vertikal anheben, wobei während der vertikalen Bewegung das Gewicht des Containers 9 mittels einer geeigneten Messmethode ermittelt wird. Nach Ermittlung des Gewichts des Containers 9 kann die automatische Bewegung des Containers 9 entlang der erzeugten Trajektorie T mit der entsprechenden Anfangsgeschwindigkeit $\dot{\sigma}_A(t) \neq 0$ erfolgen, wodurch eine Zeitersparnis resultiert, da der Container 9 nicht zuerst wieder zum Stillstand gebracht und wieder aus dem Stillstand gestartet werden muss. Das ermittelte Gewicht des Containers 9 kann vorteilhafterweise für die dynamische Bahnplanung genutzt werden, z.B. wenn kinematische Grenzwerte der Hebeeinrichtung 1, wie z.B. eine Maximalbeschleunigung $a_{Tmax}$ des Laufelements 5, vom Gewicht der Last 8 bzw. dem Container 9 abhängig sind.

Weiters ist in Fig.3 ersichtlich, dass die dynamische Bahn D am Ende vorzugsweise einen Zeitabschnitt mit Endgeschwindigkeit $\dot{\sigma}_E(t) = 0$ aufweist. Dieser Abschnitt wird benötigt, um nach der Verrundung der dynamischen Bahn D zur verrundeten dynamischen Bahn D', einen Stillstand der Last 8 im Endpunkt E gewährleisten zu können, also die Bedingung Bahngeschwindigkeit $\dot{\sigma}(t) = 0$ im Endpunkt E zu erfüllen. Die genaue Ausgestaltung hängt dabei von der gewählten Verrundungsmethode ab (Zero-Phase-Filterung - FIR etc.), wichtig dabei ist, dass die Last 8 am Ende der Trajektorie T zum Stillstand gebracht werden kann, wenn dies vorgesehen ist.

Wenn eine Endgeschwindigkeit $\dot{\sigma}_E(t) \neq 0$ der Last 8 im Endpunkt E gewünscht ist, z.B. weil der Kranführer die Last 8 manuell vertikal bis zum Stillstand im tatsächlichen Ablageort bewegt, kann das aber ebenfalls bei der dynamischen Bahnplanung berücksichtigt werden. In diesem Fall könnte die Last 8 nach der Verrundung der dynamischen Bahn D eine bestimmte Endgeschwindigkeit $\dot{\sigma}_E(t) \neq 0$ aufweisen.

Zur Erzeugung der Trajektorie T werden im gezeigten Beispiel schließlich die glatte geometrische Bahn G" und die glatte dynamische Bahn D" kombiniert, sodass man einen formelmäßigen Zusammenhang der Form $x(\sigma(t)); y(\sigma(t))$ erhält. Für die Position der Last 8 und deren zeitliche Ableitungen erhält man beispielhaft in X-Richtung:

$$x_L = x_L(\sigma(t))$$

$$\dot{x}_L = \frac{\partial x_L}{\partial \sigma}\dot{\sigma}$$

$$\ddot{x}_L = \frac{\partial^2 x_L}{\partial \sigma^2}\dot{\sigma}^2 + \frac{\partial x_L}{\partial \sigma}\ddot{\sigma}$$

$$\dddot{x}_L = \frac{\partial^3 x_L}{\partial \sigma^3}\dot{\sigma}^3 + 3\frac{\partial^2 x_L}{\partial \sigma^2}\dot{\sigma}\ddot{\sigma} + \frac{\partial x_L}{\partial \sigma}\dddot{\sigma}$$

$$x^{(4)}_L = \frac{\partial^4 x_L}{\partial \sigma^4}\dot{\sigma}^4 + 6\frac{\partial^3 x_L}{\partial \sigma^3}\dot{\sigma}^2\ddot{\sigma} + 3\frac{\partial^2 x_L}{\partial \sigma^2}\ddot{\sigma}^2 + 4\frac{\partial^2 x_L}{\partial \sigma^2}\dot{\sigma}\dddot{\sigma} + \frac{\partial x_L}{\partial \sigma}\sigma^{(4)}$$

Für die Y-Richtung ergibt sich beispielsweise aufgrund des, im Wesentlichen starren Systems des Hubantriebs (Index H) folgender vereinfachter Zusammenhang für die Seillänge $y_H$ und deren zeitliche Ableitungen.

$$y_H = y_T - y_L$$

$$\dot{y}_H = -\dot{y}_L = -\frac{dy_L}{dt}$$

$$\ddot{y}_H = -\ddot{y}_L = -\frac{d^2 y_L}{dt^2}$$

$$\ddot{y}_H = -\ddot{y}_L = -\frac{d^3 y_L}{dt^3}$$

Für eine andere Ausführung des Hubantriebs kann sich natürlich ein anderer Zusammenhang ergeben.

Um aus der Bewegung der Last 8 auf die Bewegung des Laufelements 5 zu kommen, was für die Steuerung der Hebeeinrichtung 1 benötigt wird, kann ein Modell der Hebeeinrichtung 1 verwendet werden, beispielsweise in Form einer Pendelgleichung für die Last 8 als ein einfaches Pendel gemäß

$$x_T = x_L + \frac{\ddot{x}_L (y_T - y_L)}{\ddot{y}_L + g},$$

mit der Position $x_T$ des Laufelements 5 in X-Richtung. Deren zeitliche Ableitungen ergeben die Geschwindigkeit $v_T$ des Laufelements 5 und Beschleunigung $a_T$ des Laufelements 5.

$$v_T = \dot{x}_L + \frac{-\dot{y}_L \ddot{x}_L + (y_T - y_L)\dddot{x}_L}{\ddot{y}_L + g} - \frac{(y_T - y_L)\ddot{x}_L \dddot{y}_L}{(\ddot{y}_L + g)^2}$$

$$a_T = \ddot{x}_L + \frac{\ddot{y}_L \ddot{x}_L + 2\dot{y}_L \dddot{x}_L + (y_T - y_L)x_L^{(4)}}{\ddot{y}_L + g} - \frac{2\dot{y}_L \ddot{x}_L \dddot{y}_L + 2(y_T - y_L)\dddot{x}_L \dddot{y}_L + (y_T - y_L)\ddot{x}_L x_L^{(4)}}{(\ddot{y}_L + g)^2} +$$

$$+ \frac{2(y_T - y_L)\ddot{x}_L \dddot{y}_L^2}{(\ddot{y}_L + g)^3}$$

Um das Laufelement 5, beispielsweise von der Recheneinheit 12, die beispielsweise in der Kransteuerung integriert ist, so ansteuern zu können, dass die Last 8 entlang der erzeugten Trajektorie T bewegt werden kann, werden schließlich die Lastposition $x_L = x_L(\sigma(t))$ in X-Richtung und deren zeitlichen Ableitungen $\dot{x}_L, \ddot{x}_L, \dddot{x}_L, x_L^{(4)}$, sowie die Lastposition $y_L = y_L(\sigma(t))$ sowie deren zeitliche Ableitungen $\dot{y}_L, \ddot{y}_L, \dddot{y}_L$ in die oben stehenden Pendelgleichung und deren zeitliche Ableitungen eingesetzt. Aus Gründen der Übersichtlichkeit wird an dieser Stelle auf eine separate Darstellung des formelmäßigen Zusammenhangs verzichtet. Durch die beschriebene Planung der Trajektorie T, also durch die genaue geometrische sowie dynamische Beschreibung des Bewegungsablaufs der Last 8, wird der Last 8 die geplante Trajektorie T aufgeprägt, wodurch ein Pendeln der Last 8 während der Bewegung entlang der Trajektorie T vermieden werden kann.

Aus der Trajektorie T können dann in jedem vorgegebenen Zeitschritt die Sollwerte für die Regelung der Bewegung des Laufelements 5 berechnet werden. Dazu kann die Recheneinheit 12 für die Regelung auch die Istwerte der Position des Laufelements 5 erhalten.

Das Verfahren ist natürlich nicht auf die dargestellte X-Y-Ebene $E_{XY}$ beschränkt. Bei einer dritten Bewegungsrichtung der Hebeeinrichtung 1 z.B. in Z-Richtung kann z.B. eine Trajektorie T in der Z-Y-Ebene $E_{ZY}$ analog der beschrieben Ausführungsform erzeugt werden. Dazu sind zur Berechnung der dynamischen Bahn D in der Ebene $E_{ZY}$ die kinematischen Grenzwerte des Hubantriebs in Y-Richtung sowie der tragenden Struktur 3 in Z-Richtung (statt des Laufelements 5 in X-Richtung) maßgebend. In der Pendelgleichung würde die X-Komponente des Laufelements 5 entsprechend durch eine Z-Komponente der tragenden Struktur 3 ersetzt werden, man erhält die Position

$$z_S = z_L + \frac{\ddot{z}_L (y_T - y_L)}{\ddot{y}_L + g}$$

bzw. die zeitlichen Ableitungen $v_S$, $a_S$ analog wie oben beschrieben, wobei sich der Index S auf die Struktur 3 bezieht. Die Höhe $y_T$ des Laufelements 5 ist durch die konstruktive Ausgestaltung der Hebeeinrichtung 1 vorgegeben und bleibt gleich wie bei der beschrieben Bewegung in der X-Y-Ebene $E_{XY}$. Die Position $z_T$ des Laufelements 5 in Z-Richtung ist aber in der Regel aufgrund der festen Anordnung des Auslegers 4, an dem das Laufelement 5 in X-Richtung beweglich angeordnet ist, an der tragenden Struktur 3 identisch mit der Position $z_S$ der tragenden Struktur 3 in Z-Richtung.

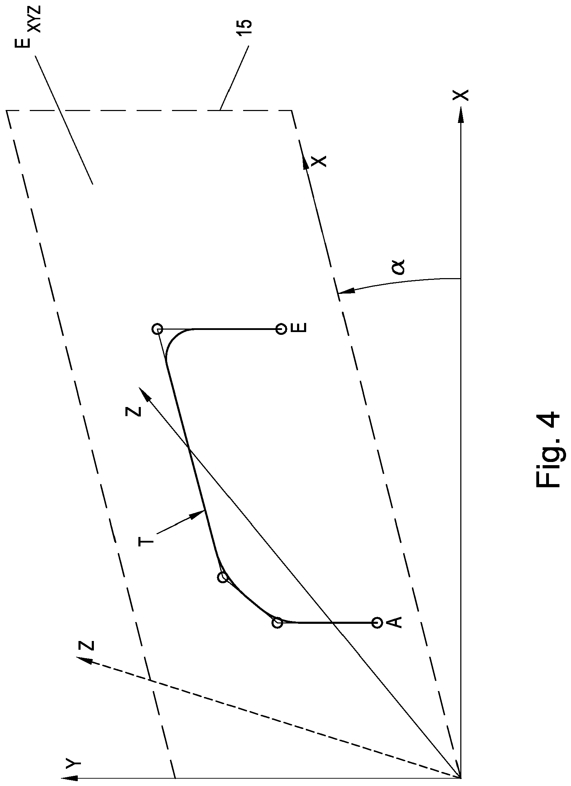

Im Falle einer dreiachsigen Hebeeinrichtung 1 mit Hubantrieb (Y-Achse), Laufelement 5 (X-Achse) und tragender Struktur 3 (Z-Achse) wäre aber auch die Erzeugung einer Trajektorie T in einer beliebigen Ebene $E_{XYZ}$ im Raum möglich, wie in Fig.4 dargestellt ist. In Fig.4 ist beispielhaft eine Trajektorie T auf einer, um einen Winkel $\alpha$ um die Y-Achse verschwenkten Ebene $E_{XYZ}$ dargestellt. Es wäre aber natürlich auch eine beliebige andere Ebene $E_{XYZ}$ im Raum möglich. Der prinzipielle Ablauf des Verfahrens bleibt dabei aber unverändert, also Festlegen von Anfangspunkt A und Endpunkt E auf der entsprechenden Ebene $E_{XYZ}$ im Raum, Festlegung von Verbotszonen $V_i$ in der Ebene $E_{XYZ}$. Erzeugung der geometrischen Bahn G (bzw. verrundeten geometrischen Bahn G' und glatten geometrischen Bahn G") in der Ebene $E_{XYZ}$, Berechnung der dynamischen Bahn D (bzw. verrrundeten und glatten dynamischen Bahn D', D") und Kombination einer der geometrischen Bahnen G, G', G" mit einer der dynamischen Bahnen D, D', D". Die Modellgleichung würde in diesem Fall um eine Z-Komponente erweitert werden, sodass eine mathematische Beschreibung der Trajektorie T in der entsprechenden Ebene $E_{XYZ}$ möglich ist. Zur Berechnung der dynamischen Bahn D wären in diesem Fall zusätzlich zu den kinematischen Grenzwerten des Laufelements 5 und des Hubantriebs auch die kinematischen Grenzwerte der tragenden Struktur 3 erforderlich, also z.B. eine Maximalgeschwindigkeit $v_{Smax}$ und eine Maximalbeschleunigung $a_{Smax}$ der tragenden Struktur 3.

Auch wenn die Erfindung beispielhaft nur anhand einer Trajektorie T auf der X-Y-Ebene $E_{XY}$ beschrieben wurde, ist ebenso eine Erweiterung von einer zweidimensionalen, auf einer Ebene $E_{XYZ}$ im Raum liegenden, Trajektorie T auf eine dreidimensionale Trajektorie T im Raum möglich. Das prinzipielle Verfahren zur Erzeugung der dreidimensionalen Trajektorie T im Raum bleibt unverändert.

In einer vorteilhaften Ausgestaltung des Verfahrens wird ein begrenzter Arbeitsbereich 15 der Hebeeinrichtung 1 in der ersten Ebene, der zweiten Ebene oder im Bewegungsraum festgelegt und die Recheneinheit 12 prüft, ob der Anfangspunkt A, der Endpunkt E und die Verbotszonen $V_i$ innerhalb des Arbeitsbereichs 15 liegen und ob eine Trajektorie T zwischen Anfangspunkt A und Endpunkt E erzeugt werden kann. Ein Arbeitsbereich 15 ist beispielhaft in Fig.1 und Fig.2 dargestellt. Dabei ist der Arbeitsbereich 15 in Fig.1 z.B. durch die Eckpunkte 15a, 15b eines Rechtecks mit entsprechenden Koordinaten $x_{min}$, $y_{min}$ bzw. $x_{max}$, $y_{max}$ in der Ebene $E_{XY}$ definiert. Durch diese Plausibilisierung wird gewährleistet, dass der vorgegebene Anfangspunkt A, Endpunkt E sowie die Trajektorie T auch tatsächlich von der Hebeeinrichtung 1 realisierbar sind, also von der Last 8 auch tatsächlich erreichbar sind. Je nach Größe und konstruktiver Ausführung der Hebeeinrichtung 1 kann der Arbeitsbereich 15 natürlich variieren.

Die Festlegung des Anfangspunkts A, des Endpunkts E sowie der Verbotszonen $V_i$ und die Vorgabe an die Recheneinheit 12 kann manuell über eine geeignete Schnittstelle z.B. durch einen Benutzer wie einen Kranführer erfolgen, vorzugsweise aber automatisch z.B. mittels eines Laser-Scan-Verfahrens. Dabei wird vorzugsweise der Arbeitsbereich 15 der Hebeeinrichtung 1 mittels eines, beispielsweise am Laufelement 5 angeordneten, Laser-Scanners abgetastet und beispielsweise die Positionen sowie ggf. auch die Dimensionen von Containern 9 ermittelt und an die Recheneinheit 12 übermittelt. Solche Laser-Scan-Verfahren sind im Stand der Technik bekannt, weshalb hier nicht näher darauf eingegangen wird.

**Patentansprüche**

1.   Verfahren zum Steuern einer Hebeeinrichtung (1) zum Bewegen einer Last (8) entlang einer Trajektorie (T) von einem Anfangspunkt (A) zu einem Endpunkt (E), wobei die Last (8) entlang einer ersten Bewegungsachse und entlang einer zweiten Bewegungsachse bewegt wird, wobei der Anfangspunkt (A) und der Endpunkt (E) der Trajektorie (T) sowie Verbotszonen ($V_i$) festgelegt werden, die während der Bewegung der Last (8) von der Last (8) vermieden werden, **dass** daraus von einer Recheneinheit (12) eine geometrische oder verrundete geometrische oder glatte geometrische Bahn (G, G', G") berechnet wird, **dadurch gekennzeichnet, dass** dass kinematische und geometrische Grenzwerte der Hebeeinrichtung (1) vorgegeben werden, aus denen von der Recheneinheit (12), basierend auf der geometrischen oder verrundeten geometrischen oder glatten geometrischen Bahn (G, G', G"), eine dynamische oder verrundete dynamische oder glatte dynamische Bahn (D, D', D") berechnet wird, welche die zeitliche Information der Bewegung der Last (8) entlang der geometrischen oder verrundeten geometrischen oder glatten geometrischen Bahn (G, G', G") bereitstellt, und dass die geometrische oder verrundete geometrische oder glatte geometrische Bahn (G, G', G") und die dynamische oder verrundete dynamische oder glatte dynamische Bahn (D, D', D") zur Erzeugung der Trajektorie (T) kombiniert werden.

2.   Verfahren nach Anspruch 1, **dadurch gekennzeichnet, dass** der Anfangspunkt (A) und der Endpunkt (E) der Trajektorie (T) in einer, von der ersten Bewegungsachse und der zweiten Bewegungsachse aufgespannten, ersten Ebene festgelegt werden, dass die Verbotszonen ($V_i$) in der ersten Ebene festgelegt werden, dass die geometrische Bahn (G) in der ersten Ebene berechnet wird, dass basierend auf der geometrischen Bahn (G), die dynamische Bahn (D) berechnet wird und dass die geometrische Bahn (G) und die dynamische Bahn (Dzur Erzeugung der Trajektorie (T) in der ersten Ebene kombiniert werden.

3. Verfahren nach Anspruch 1, **dadurch gekennzeichnet, dass** die Last (8) entlang einer dritten Bewegungsachse der Hebeeinrichtung (1) bewegt wird, dass der Anfangspunkt (A) und der Endpunkt (E) der Trajektorie (T) in einem von den drei Bewegungsachsen der Hebeeinrichtung (1) aufgespannten Bewegungsraum festgelegt werden, vorzugsweise in einer beliebigen zweiten Ebene im Bewegungsraum, dass die Verbotszonen ($V_i$) im Bewegungsraum, vorzugsweise in der zweiten Ebene festgelegt werden, dass die geometrische Bahn (G) im Bewegungsraum, vorzugsweise in der zweiten Ebene berechnet wird, dass basierend auf der geometrischen Bahn (G), die dynamische Bahn (D) berechnet wird und dass die geometrische Bahn (G) und die dynamische Bahn (D) zur Erzeugung der Trajektorie (T) im Bewegungsraum, vorzugsweise in der zweiten Ebene kombiniert werden.

4. Verfahren nach einem der Ansprüche 1 bis 3, **dadurch gekennzeichnet, dass** ein begrenzter Arbeitsbereich (15) der Hebeeinrichtung (1) in der ersten Ebene, der zweiten Ebene oder im Bewegungsraum festgelegt wird und dass die Recheneinheit (12) prüft, ob der Anfangspunkt (A), der Endpunkt (E) und die Verbotszonen ($V_i$) innerhalb des Arbeitsbereichs (15) liegen und ob eine Trajektorie (T) zwischen Anfangspunkt (A) und Endpunkt (E) erzeugt werden kann.

5. Verfahren nach einem der Ansprüche 1 bis 4, **dadurch gekennzeichnet, dass** als kinematische Grenzwerte der Hebeeinrichtung (1) eine Maximalgeschwindigkeit ($v_{Vmax}$) und eine Maximalbeschleunigung ($a_{Vmax}$) der tragenden Struktur (3), eine Maximalgeschwindigkeit ($v_{Tmax}$) und eine Maximalbeschleunigung ($a_{Tmax}$) des Laufelements sowie eine Maximalgeschwindigkeit ($v_{Hmax}$) und eine Maximalbeschleunigung ($a_{Hmax}$) des Hubantriebs festgelegt werden und als geometrischer Grenzwert ein maximaler Auslenkwinkel ($\Theta_{max}$) des Lastaufnahmeelements (7) festgelegt wird.

6. Verfahren nach einem der Ansprüche 1 bis 5, **dadurch gekennzeichnet, dass** zur Erzeugung der geometrischen Bahn (G) der Anfangspunkt (A) mit dem Endpunkt (E) mittels Geraden ($13_i$) über Stützpunkte ($S^*$) verbunden wird, wobei die Stützpunkte ($S^*$) aus den Verbotszonen ($V_i$) abgeleitet werden.

7. Verfahren nach Anspruch 6, **dadurch gekennzeichnet, dass** zur Erzeugung der verrundeten geometrischen Bahn (G') die geometrische Bahn (G) an den Stützpunkten ($S^*$) mittels Kreissegmenten ($14_i$) oder Klothoiden oder Bezierkurven verrundet wird.

8. Verfahren nach einem der Ansprüche 1 bis 7, **dadurch gekennzeichnet, dass** zur Erzeugung der verrundeten dynamischen Bahn (D') die dynamische Bahn (D) mittels einer Vorwärts-Rückwärts-Filterungsmethode verrundet wird.

9. Verfahren nach Anspruch 7 oder 8, **dadurch gekennzeichnet, dass** zur Erzeugung der glatten dynamischen Bahn (D") die verrundete dynamische Bahn (D') und/oder zur Erzeugung der glatten geometrischen Bahn (G") die verrundete geometrische Bahn (G') mittels B-Splines geglättet wird.

10. Hebeeinrichtung (1) mit zumindest zwei Bewegungsachsen zum Bewegen einer Last (8) entlang einer Trajektorie (T) von einem Anfangspunkt (A) zu einem Endpunkt (E) mit einem Laufelement (5), einem Lastaufnahmeelement (7) zur Aufnahme der Last (8) und einem Hubantrieb zum Heben des Lastaufnahmeelement (7), wobei das Laufelement (5) entlang einer ersten Bewegungsachse bewegbar ist, wobei das Lastaufnahmeelement (7) mit zumindest einem Halteelement (6) mit dem Laufelement (5) verbunden ist und wobei das Lastaufnahmeelement (7) mittels des Hubantriebs entlang einer zweiten Bewegungsachse bewegbar ist, **dadurch gekennzeichnet, dass** eine Recheneinheit (12) vorgesehen ist, die zwischen Anfangspunkt (A) und Endpunkt (E) und definierten, von der Last (8) während der Bewegung der Last (8) zu vermeidenden, Verbotszonen ($V_i$) die Trajektorie berechnet, indem die Recheneinheit (12) ausgestaltet ist, eine geometrische, oder eine verrundete geometrische oder eine glatte geometrische Bahn (G. G', G") zwischen Anfangspunkt (A) und Endpunkt (E) zu berechnen, basierend auf der geometrischen oder verrundeten geometrischen oder glatten geometrischen Bahn (G, G', G") anhand vorgegebener kinematischer und geometrischer Grenzwerte der Hebeeinrichtung (1) eine dynamische oder verrundete dynamische oder glatte dynamische Bahn (D, D', D") zu berechnen und die geometrische oder verrundete geometrische oder glatte geometrische Bahn (G, G', G") und die dynamische oder verrundete dynamische oder glatte dynamische Bahn (D, D', D") zur Trajektorie (T) zu kombinieren.

11. Hebeeinrichtung (1) nach Anspruch 10, **dadurch gekennzeichnet, dass** der Anfangspunkt (A) und der Endpunkt (E) in einer, von der ersten Bewegungsachse und der zweiten Bewegungsachse aufgespannten, ersten Ebene festgelegt sind, dass die Verbotszonen ($V_i$) in der ersten Ebene festgelegt sind, wobei die Berechnung der Trajektorie (T) in der ersten Ebene erfolgt.

**12.** Hebeeinrichtung (1) nach Anspruch 10, **dadurch gekennzeichnet, dass** die Hebeeinrichtung (1) eine dritte Bewegungsachse aufweist, wobei die Last (8) mittels einer tragenden Struktur (3) entlang der dritten Bewegungsachse bewegbar ist, wobei der Anfangspunkt (A) und der Endpunkt (E) in einem von den drei Bewegungsachsen der Hebeeinrichtung (1) aufgespannten Bewegungsraum festgelegt sind, vorzugsweise in einer im Bewegungsraum liegenden, zweiten Ebene, dass die Verbotszonen ($V_i$) im Bewegungsraum, vorzugsweise in der zweiten Ebene festgelegt sind, wobei die Berechnung der Trajektorie (T) im Bewegungsraum, vorzugsweise in der zweiten Ebene erfolgt.

**13.** Hebeeinrichtung (1) nach einem der Ansprüche 10 bis 12, **dadurch gekennzeichnet, dass** die Hebeeinrichtung (1) einen begrenzten Arbeitsbereich (15) in der ersten Ebene, der zweiten Ebene oder im Bewegungsraum aufweist, wobei der begrenzte Arbeitsbereich (15) in der Recheneinheit (12) zur Überprüfung, ob der Anfangspunkt (A), der Endpunkt (E) und die Verbotszonen ($V_i$) innerhalb des Arbeitsbereichs (15) liegen und ob eine Trajektorie (T) zwischen Anfangspunkt (A) und Endpunkt (E) erzeugt werden kann, festgelegt ist.

**14.** Hebeeinrichtung (1) nach einem der Ansprüche 10 bis 13, **dadurch gekennzeichnet, dass** als kinematische Grenzwerte der Hebeeinrichtung (1) eine Maximalgeschwindigkeit ($v_{Smax}$) und eine Maximalbeschleunigung ($a_{Smax}$) der tragenden Struktur (3), eine Maximalgeschwindigkeit ($v_{Tmax}$) und eine Maximalbeschleunigung ($a_{Tmax}$) des Laufelements (5), eine Maximalgeschwindigkeit ($v_{Hmax}$) und eine Maximalbeschleunigung ($a_{Hmax}$) des Hubantriebs festgelegt sind sowie als geometrischer Grenzwert ein maximaler Auslenkwinkel ($\Theta_{max}$) des Lastaufnahmeelements (7) festgelegt ist.

**15.** Hebeeinrichtung (1) nach einem der Ansprüche 10 bis 14, **dadurch gekennzeichnet, dass** die Recheneinheit (12) vorgesehen ist, zur Erzeugung der geometrischen Bahn (G) den Anfangspunkt (A) mit dem Endpunkt (E) mittels Geraden (13i) über, aus den Verbotszonen ($V_i$) abgeleitete, Stützpunkte ($S^*$) zu verbinden.

**16.** Hebeeinrichtung (1) nach Anspruch 15, **dadurch gekennzeichnet, dass** die Recheneinheit (12) vorgesehen ist, die geometrische Bahn (G) zur Erzeugung der verrundeten geometrischen Bahn (G') an den Stützpunkten ($S^*$) mittels Kreissegmenten ($14_i$) oder Klothoiden oder Bezierkurven zu verrunden und/oder zur Erzeugung der verrundeten dynamischen Bahn (D') die dynamische Bahn (D) mittels einer Vorwärts-Rückwärts-Filterungsmethode zu verrunden.

**17.** Hebeeinrichtung (1) nach Anspruch 16, **dadurch gekennzeichnet, dass** die Recheneinheit (12) vorgesehen ist, die verrundete geometrische Bahn (G') zur Erzeugung der glatten geometrischen Bahn (G") und/oder die verrundete dynamische Bahn (D') zur Erzeugung der glatten dynamischen Bahn (D") mittels B-Splines zu glätten.

**Claims**

**1.** A method for controlling a lifting device (1) for moving a load (8) along a trajectory (T) from a start point (A) to an end point (E), wherein the load (8) is moved along a first motion axis and along a second motion axis, the start point (A) and the end point (E) of the trajectory (T) as well as the prohibited zones ($V_i$) are established which, during motion of the load (8) are avoided by the load (8), **that** from this, a computing unit (12) calculates a geometrical or rounded geometrical or smooth geometrical path (G, G', G"), **characterized in that** kinematic and geometric limit values of the lifting device (1) are predetermined, from which the computing unit (12), based on the geometric or rounded geometric or smooth geometric path (G, G', G"), calculates a dynamic or rounded dynamic or smooth dynamic path (D, D', D"), which provides the time information of motion of the load (8) along the geometric or rounded geometric or smooth geometric path (G, G', G"), and that the geometric or rounded geometric or smooth geometric path (G, G', G") and the dynamic or rounded dynamic or smooth dynamic path (D, D', D") are combined for producing the trajectory (T).

**2.** The method according to claim 1, **characterized in that** the start point (A) and the end point (E) of the trajectory (T) are established in a first plane, which is spanned by the first motion axis and the second motion axis, that the prohibited zones ($V_i$) are established in the first plane, that the geometric path (G) is calculated in the first plane, that based on the geometric path (G), the dynamic path (D) is calculated, and the geometric path (G) and the dynamic path (D) are combined for producing the trajectory (T) in the first plane.

**3.** The method according to claim 1, **characterized in that** the load (8) is moved along a third motion axis of the lifting device (1), that the start point (A) and the end point (E) of the trajectory (T) are established in a motion space spanned by the three motion axes of the lifting device (1), preferably in any second plane in the motion space, that the prohibited zones ($V_i$) are established in the motion space, preferably in the second plane, that the geometric path (G) is calculated in the motion space, preferably in the second plane, that based on the geometric path (G), the dynamic path (D) is calculated, and that the geometric path (G) and the dynamic path (D) for producing the trajectory (T) in the motion space are preferably combined in the second plane.

4.  The method according to any one of claims 1 to 3, **characterized in that** a limited working region (15) of the lifting device (1) in the first plane, the second plane, or in the motion space is established, and that the computing unit (12) tests whether the start point (A), the end point (E), and the prohibited zones ($V_i$) lie within the working region (15) and whether a trajectory (T) can be produced between the start point (A) and end point (E).

5.  The method according to any one of claims 1 to 4, **characterized in that** as kinematic limit values of the lifting device (1), a maximal speed ($v_{Vmax}$) and a maximal acceleration ($a_{Vmax}$) of the bearing structure (3), a maximal speed ($v_{Tmax}$) and a maximal acceleration ($a_{Tmax}$) of the travelling element and a maximal speed ($v_{Hmax}$) and a maximal acceleration ($a_{Hmax}$) of the lift drive are established, and as geometric limit value, a maximal angle of deflection ($\Theta_{max}$) of the load receiver element (7) is established.

6.  The method according to any one of claims 1 to 5, **characterized in that** for producing the geometric path (G), the start point (A) is connected to the end point (E) by means of straight lines ($13i$) via supporting points ($S^*$), wherein the supporting points ($S^*$) are derived from the prohibited zones ($V_i$).

7.  The method according to claim 6, **characterized in that** for producing the rounded geometric path (G'), the geometric path (G) at the supporting points ($S^*$) is rounded by means of circular segments ($14_i$) or clothoids or Bezier curves.

8.  The method according to one of the claims 1 to 7, **characterized in that** for producing the rounded dynamic path (D'), the dynamic path (D) is rounded by means of a forward-backward filtering method.

9.  The method according to claim 7 or 8, **characterized in that** for producing the smooth dynamic path (D"), the rounded dynamic path (D') and/or for producing the smooth geometric path (G"), the rounded geometric path (G') is smoothed by means of B-splines.

10.  A lifting device (1) having at least two motion axes for moving a load (8) along a trajectory (T) from a start point (A) to an end point (E) with a travelling element (5), a load receiver element (7) for receiving the load (8), and a lift drive for lifting the load receiver element (7), wherein the travelling element (5) is movable along a first motion axis, wherein the load receiver element (7) is connected by at least one retaining element (6) to the travelling element (5), and wherein the load receiver element (7) is movable by the lift drive along a second motion axis, **characterized in that** a computing unit (12) is provided which calculates the trajectory between start point (A) and end point (E) and defined prohibited zones ($V_i$) to be avoided by the load (8) during motion of the load (8), wherein the computing unit (12) is configured to calculate a geometric or rounded geometric or smooth geometric path (G, G', G") between the start point (A) and end point (E), based on the geometric or rounded or smooth geometric path (G, G', G") with reference to predetermined kinematic and geometric limit values of the lifting device (1), to calculate a dynamic or rounded dynamic or smooth dynamic path (D, D', D") and to combine the geometric or rounded geometric or smooth geometric path (G, G', G") and the dynamic or rounded dynamic or smooth dynamic path (D, D', D") into the trajectory (T).

11.  The lifting device (1) according to claim 10, **characterized in that** the start point (A) and end point (E) are established in a first plane spanned by the first motion axis and the second motion axis, and that the prohibited zones ($V_i$) are established in the first plane, wherein the calculation of the trajectory (T) is carried out in the first plane.

12.  The lifting device (1) according to claim 10, **characterized in that** the lifting device (1) has a third motion axis, wherein the load (8) is movable by means of a bearing structure (3) along the third motion axis, wherein the start point (A) and the end point (E) are established in a motion space spanned by the three motion axes of the lifting device (1), preferably in a second plane lying in the motion space, that the prohibited zones ($V_i$) are established in the motion space, preferably in the second plane, wherein the calculation of the trajectory (T) is carried out in the motion space, preferably in the second plane.

13.  The lifting device (1) according to any one of claims 10 to 12, **characterized in that** the lifting device (1) has a limited working region (15) in the first plane, the second plane, or in the motion space, wherein the limited working region (15) is established in the computing unit (12) for testing whether the start point (A), the end point (E), and

the prohibited zones ($V_i$) lie within the working region (15) and whether a trajectory (T) can be produced between start point (A) and end point (E).

14. The lifting device (1) according to any one of claims 10 to 13, **characterized in that** as kinematic limit values of the lifting device (1), a maximal speed ($v_{Smax}$) and a maximal acceleration ($a_{Smax}$) of the bearing structure (3), a maximal speed ($v_{Tmax}$) and a maximal acceleration ($a_{Tmax}$) of the travelling element (5), a maximal speed ($v_{Hmax}$) and a maximal acceleration ($a_{Hmax}$) of the lift drive are established, and as geometric limit value, a maximal angle of deflection ($\Theta_{max}$) of the load receiver element (7) is established.

15. The lifting device (1) according to any one of the claims 10 to 14, **characterized in that** the computing unit (12) is provided for producing the geometric path (G) to connect the start point (A) to the end point (E) by means of straight lines ($13_i$) via supporting points ($S^*$) derived from the prohibited zones ($V_i$).

16. The lifting device (1) according to claim 15, **characterized in that** the computing unit (12) is provided to round the geometric path (G) for producing the rounded geometric path (G') at the supporting points ($S^*$) by means of circular segments ($14_i$) or clothoids or Bezier curves and/or, for producing the rounded dynamic path (D'), to round the dynamic path (D) by means of a forward-backward filtering method.

17. The lifting device (1) according to claim 16, **characterized in that** the computing unit (12) is provided to smooth the rounded geometric path (G') for producing the smooth geometric path (G") and/or the rounded dynamic path (D') for producing the smooth dynamic path (D") by means of B-splines.

## Revendications

1. Procédé de commande d'un dispositif de levage (1) destiné à déplacer une charge (8) suivant une trajectoire (T) d'un point initial (A) à un point final (E), la charge (8) étant déplacée suivant un premier axe de déplacement et suivant un deuxième axe de déplacement, le point initial (A) et le point final (E) de la trajectoire (T) ainsi que les zones prohibées ($V_i$) étant définis, lesquelles zones prohibées sont évitées par la charge (8) pendant le déplacement de celle-ci (8), un trajet géométrique ou géométrique arrondi ou géométrique lisse (G, G', G") étant ainsi calculé par une unité de calcul (12), **caractérisé en ce que** des valeurs limites cinématiques et géométriques du dispositif de levage (1) sont prédéfinies, un trajet dynamique ou arrondi dynamique ou dynamique lisse (D, D', D") est calculé par l'unité de calcul (12) à partir desdites valeurs limites, sur la base du trajet géométrique ou géométrique arrondi ou géométrique lisse (G, G', G"), lequel trajet dynamique ou dynamique arrondi ou dynamique lisse (D, D', D") fournit les informations temporelles sur le déplacement de la charge (8) suivant le trajet géométrique ou géométrique arrondi ou géométrique lisse (G, G', G"), et **en ce que** le trajet géométrique ou géométrique arrondi ou géométrique lisse (G, G', G") et le trajet dynamique ou dynamique arrondi ou dynamique lisse (D, D', D") sont combinées pour générer la trajectoire (T).

2. Procédé selon la revendication 1, **caractérisé en ce que** le point initial (A) et le point final (E) de la trajectoire (T) sont définis dans un premier plan traversé par le premier axe de déplacement et le deuxième axe de déplacement, les zones prohibée ($V_i$) sont définies dans le premier plan, **en ce que** le trajet géométrique (G) dans le premier plan est calculé, **en ce que** le trajet dynamique (D) est calculé sur la base du trajet géométrique (G) et **en ce que** le trajet géométrique (G) et le trajet dynamique (D) sont combinés pour générer la trajectoire (T) dans le premier plan.

3. Procédé selon la revendication 1, **caractérisé en ce que** la charge (8) est déplacée suivant un troisième axe de déplacement du dispositif de levage (1), **en ce que** le point initial (A) et le point final (E) de la trajectoire (T) sont définis dans un espace de déplacement traversé par les trois axes de déplacement du dispositif de levage (1), de préférence dans un second plan dans l'espace de déplacement, **en ce que** les zones prohibées ($V_i$) sont définies dans l'espace de déplacement, de préférence dans le second plan, **en ce que** le trajet géométrique (G) est calculé dans l'espace de déplacement, de préférence dans le second plan, **en ce que** le trajet dynamique (D) est calculé sur la base du trajet géométrique (G), et **en ce que** le trajet géométrique (G) et le trajet dynamique (D) sontcombinés pour générer la trajectoire (T) dans l'espace de déplacement, de préférence dans le second plan.

4. Procédé selon l'une des revendications 1 à 3, **caractérisé en ce qu'**une zone de travail limitée (15) du dispositif de levage (1) est définie dans le premier plan, le second plan ou dans l'espace de déplacement, et **en ce que** l'unité de calcul (12) vérifie si le point initial (A), le point final (E) et les zones prohibées ($V_i$) se trouvent dans la zone de travail (15) et si une trajectoire (T) peut être générée entre le point initial (A) et le point final (E).

**5.** Procédé selon l'une des revendications 1 à 4, **caractérisé en ce qu'**une vitesse maximale ($v_{Vmax}$) et une accélération maximale ($a_{Vmax}$) de la structure portante (3), une vitesse maximale ($v_{Tmax}$) et une accélération maximale ($a_{Tmax}$) de l'élément mobile ainsi qu'une vitesse maximale ($v_{Hmax}$) et une accélération maximale ($a_{Hmax}$) de l'entraînement de levage sont définies comme valeurs limites cinématiques du dispositif de levage (1) et **en ce qu'**un angle de déviation maximal ($\Theta_{max}$) de l'élément récepteur de charge (7) est défini comme valeur limite géométrique.

**6.** Procédé selon l'une des revendications 1 à 5, **caractérisé en ce que,** pour générer le trajet géométrique (G), le point initial (A) est relié au point final (E) au moyen de lignes droites ($13_i$) par l'intermédiaire de points d'appui (S*), les points d'appui (S*) étant dérivés des zones prohibées ($V_i$).

**7.** Procédé selon la revendication 6, **caractérisé en ce que,** pour générer le trajet géométrique arrondi (G'), le trajet géométrique (G) est arrondi au niveau des points d'appui (S*) au moyen de segments circulaires ($14_i$) ou de clothoïdes ou de courbes de Bézier.

**8.** Procédé selon l'une des revendications 1 à 7, **caractérisé en ce que,** pour générer le trajet dynamique arrondi (D'), le trajet dynamique (D) est arrondi au moyen d'une méthode de filtrage avant/arrière.

**9.** Procédé selon la revendication 7 ou 8, **caractérisé en ce que** le trajet dynamique arrondi (D') est lissé pour produire le trajet dynamique lisse (D") et/ou le trajet géométrique arrondi (G') est lissé au moyen de splines B pour produire le trajet géométrique lisse (G").

**10.** Dispositif de levage (1) comportant au moins deux axes de déplacement destinés à déplacer une charge (8) suivant une trajectoire (T) d'un point initial (A) à un point final (E) à l'aide d'un élément mobile (5), un élément récepteur de charge (7) destiné recevoir la charge (8) et un entraînement de levage destiné à soulever l'élément récepteur de charge (7), l'élément mobile (5) étant mobile suivant un premier axe de déplacement, l'élément récepteur de charge (7) étant relié à l'élément mobile (5) par au moins un élément de retenue (6), et l'élément récepteur de charge (7) étant mobile, au moyen de l'entraînement de levage, suivant un deuxième axe de déplacement, **caractérisé en ce qu'**une unité de calcul (12) est prévue, laquelle unité de calcul calcule la trajectoire entre le point initial (A) et le point final (E), et les zones prohibées ($V_i$) définies, à éviter par la charge (8) pendant le déplacement de celle-ci (8), par la conception de l'unité de calcul (12) de manière à calculer un trajet géométrique, ou géométrique arrondie ou géométrique lisse (G, G', G") entre le point initial (A) et le point final (E), à calculer un trajet dynamique ou dynamique arrondie ou dynamique lisse (D, D', D") à l'aide de valeurs limites cinématiques et géométriques du dispositif de levage (1) sur la base du trajet géométrique ou géométrique arrondie ou géométrique lisse (G, G', G"), et à combiner le trajet géométrique ou géométrique arrondi ou géométrique lisse (G, G', G") et le trajet dynamique ou dynamique arrondi ou dynamique lisse (D, D', D") à la trajectoire (T).

**11.** Dispositif de levage (1) selon la revendication 10, **caractérisé en ce que** le point initial (A) et le point final (E) sont définis dans un premier plan traversé par le premier axe de déplacement et le deuxième axe de déplacement, **en ce que** les zones prohibées ($V_i$) sont définies dans le premier plan, le calcul de la trajectoire (T) ayant lieu dans le premier plan.

**12.** Dispositif de levage (1) selon la revendication 10, **caractérisé en ce que** le dispositif de levage (1) présente un troisième axe de déplacement, la charge (8) étant mobile suivant le troisième axe de déplacement au moyen d'une structure portante (3), le point initial (A) et le point final (E) étant définis dans un espace de déplacement traversé par les trois axes de déplacement du dispositif de levage (1), de préférence dans un second plan se trouvant dans l'espace de déplacement et les zones prohibées ($V_i$) étant définies dans l'espace de déplacement, de préférence dans le second plan, le calcul de la trajectoire (T) ayant lieu dans l'espace de déplacement, de préférence dans le second plan.

**13.** Dispositif de levage (1) selon l'une des revendications 10 à 12, **caractérisé en ce que** le dispositif de levage (1) comporte une zone de travail limitée (15) dans le premier plan, le second plan ou dans l'espace de déplacement, la zone de travail limitée (15) étant définie dans l'unité de calcul (12) pour vérifier si le point initial (A), le point final (E) et les zones prohibées ($V_i$) se trouvent dans la zone de travail (15) et si une trajectoire (T) peut être générée entre le point initial (A) et le point final (E).

**14.** Dispositif de levage (1) selon l'une des revendications 10 à 13, **caractérisé en ce qu'**une une vitesse maximale ($v_{Smax}$) et une accélération maximale ($a_{Smax}$) de la structure portante (3), une vitesse maximale ($V_{Tmax}$) et une accélération maximale ($a_{Tmax}$) de l'élément mobile (5), une vitesse maximale ($v_{Hmax}$) et une accélération maximale

($a_{Hmax}$) de l'entraînement de levage sont définies comme valeurs limites cinématiques du dispositif de levage (1) et **en ce qu'**un angle de déviation maximal ($\Theta_{max}$) de l'élément récepteur de charge (7) est défini comme valeur limite géométrique.

**15.** Dispositif de levage (1) selon l'une des revendications 10 à 14, **caractérisé en ce que** l'unité de calcul (12) est prévue pour relier le point initial (A) au point final (E) au moyen de lignes droites ($13_i$) par l'intermédiaire des points d'appui (S*) dérivés des zones prohibées ($V_i$) afin de générer le trajet géométrique (G).

**16.** Dispositif de levage (1) selon la revendication 15, **caractérisé en ce que** l'unité de calcul (12) est prévue pour arrondir le trajet géométrique (G) afin de générer le trajet géométrique arrondi (G') au niveau des points d'appui (S*) au moyen de segments circulaires ($14_i$) ou de clothoïdes ou de courbes de Bézier et/ou pour arrondir le trajet dynamique (D) afin de générer le trajet dynamique arrondi (D') au moyen d'une méthode de filtrage avant et arrière.

**17.** Dispositif de levage (1) selon la revendication 16, **caractérisé en ce que** l'unité de calcul (12) est prévue pour lisser le trajet géométrique arrondi (G') afin de générer le trajet géométrique lisse (G") et/ou le trajet dynamique arrondi (D') afin de générer le trajet dynamique lisse (D") au moyen de splines B.

Fig. 1

EP 3 461 783 B1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070289931 A1

- US 6065619 A